# EUROPEAN PATENT SPECIFICATION

(11) **EP 2 879 436 B1**
(45) Date of publication and mention of the grant of the patent: **10.01.2018**
(21) Application number: 12883067.6
(22) Date of filing: 17.08.2012
(51) Int. Cl.: H04W 72/04, H04W 76/02, H04W 88/04

(54) **METHOD, DEVICE, AND SYSTEM FOR ESTABLISHING RADIO BEARER BETWEEN USER EQUIPMENTS**
VERFAHREN, VORRICHTUNG UND SYSTEM ZUR HERSTELLUNG EINES FUNKTRÄGERS ZWISCHEN ENDGERÄTEN
PROCÉDÉ, DISPOSITIF ET SYSTÈME D'ÉTABLISSEMENT DE LIEN RADIO ENTRE TERMINAUX

(43) Date of publication of application: 03.06.2015
(73) Proprietor: Huawei Technologies Co., Ltd., Longgang District Shenzhen, Guangdong 518129 (CN)
(72) Inventor: LI, Yue, Shenzhen Guangdong 518129 (CN); GUO, Xiaolong, Shenzhen Guangdong 518129 (CN)
(74) Representative: Gill Jennings & Every LLP
(86) International application number: PCT/CN2012/080327
(87) International publication number: WO 2014/026390

(56) References cited:
- WO-A1-2011/123809
- WO-A2-2012/091418
- CN-A- 101 877 915
- CN-A- 102 195 704
- US-A1- 2011 235 514
- LEI LEI ET AL: "Operator controlled device-to-device communications in LTE-advanced networks", IEEE WIRELESS COMMUNICATIONS, IEEE SERVICE CENTER, PISCATAWAY, NJ, US, vol. 19, no. 3, 1 June 2012 (2012-06-01), pages 96-104, XP011480414, ISSN: 1536-1284, DOI: 10.1109/MWC.2012.6231164
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 27 June 2012 (2012-06-27), pages 1-201, XP050581140,

## Description

### TECHNICAL FIELD

The present invention relates to the field of communications, and in particular, to a method, an apparatus, and a system for establishing a radio bearer (Radio Bear, RB).

### BACKGROUND

A UE (User Equipment, user equipment) may upload and download various kinds of data by applying a data communication service provided by a mobile communications system. Generally, in the prior art, the reliability of data transmission of a UE at a cell edge is improved by commonly adopting CoMP (Coordinated Multipoint, coordinated multi-point transmission/reception technology) and the throughput of the UE is improved by adopting CA (Carrier Aggregation, carrier aggregation). In the foregoing method, a data communication means is operated for a single UE, and once an environment where the UE itself is located is deteriorated, the reliability and/or the throughput of data transmission of UE will decrease sharply. In order to solve the problem, the concept of multiple users cooperative communication is put forward.

During multiple users cooperative communication, a procedure of sending data to a destination UE by a base station may be: first sending the data to a UE with a best channel condition that is near the destination UE, and then, forwarding the data to the final destination UE through a short-distance communication technology between UEs. In this way, multiple UEs cooperative communication, even though an environment where the destination UE itself is located is deteriorated and a channel condition is poor, the destination UE may still reliably receive the data forwarded by the UE with a good channel condition without affecting the throughput and the reliability of the destination UE.

Generally, a destination UE is called a beneficial UE, and a UE for forwarding data is called a support UE. When the foregoing multiple users cooperative communication method is performed, the base station needs to distribute the data sent to the beneficial UE to the support UE, and then, the data is forwarded to the beneficial UE by applying a short-distance communication protocol. Therefore, in order to complete the foregoing multiple users cooperative communication method, the support UE and the beneficial UE need to establish a cooperative RB (Radio Bear, radio bearer) with a corresponding mapping relationship, and besides a protocol layer in the prior art, a cooperative layer providing functions such as data distribution and combination, channel quality monitoring, and radio bearer mapping is further introduced to the cooperative RB. In the prior art, a conventional RB established by each UE cannot be used to implement the foregoing multiple users cooperative communication.

WO2011/123809A1 discloses a method for cooperative transmission in a wireless system, wherein a base station sends data to a relay node and an user equipment in a first hop, then, the relay node also sends data received from the base station in the first hop to the user equipment in a second hop.

### SUMMARY

Embodiments of the present invention provide a method, an apparatus, and a system for establishing a radio bearer, which can implement multiple users cooperative communication.

Aspects of the invention are provided in the claims.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a schematic flowchart of a method for establishing an RB according to an embodiment of the present invention;
FIG. 2 is a schematic flowchart of another method for establishing an RB according to an embodiment of the present invention;
FIG. 3 is a schematic flowchart of a method for establishing an RB according to another embodiment of the present invention;
FIG. 4 is a schematic flowchart of another method for establishing an RB according to another embodiment of the present invention;
FIG. 5 is a schematic flowchart of another method for establishing an RB according to another embodiment of the present invention;
FIG. 6 is a structural block diagram of a base station according to another embodiment of the present invention;
FIG. 7 is a structural block diagram of a beneficial UE according to another embodiment of the present invention;
FIG. 8 is a structural block diagram of a support UE according to another embodiment of the present invention;
FIG. 9 is a structural block diagram of another base station according to another embodiment of the present invention;
FIG. 10 is a structural block diagram of another beneficial UE according to another embodiment of the present invention;
FIG. 11 is a structural block diagram of another support UE according to another embodiment of the present invention; and
FIG. 12 is a schematic structural diagram of a system for establishing an RB according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Basically, smart phones can support a short-distance communication technology (such as WiFi or BlueTooth) and a cellular communications technology (such as LTE, 3G UMTS, CDMA, 2G GSM, or WiMAX) at the same time. Taking that a cellular technology is SAE/LTE and a short-distance communication technology is the WiFi as an example, in a scenario of a single network node and cooperative communication between multiple users, or in a scenario called multiple UEs cooperative communication (multiple UEs cooperative communication, MUCC), when at least two UEs have the characteristic of supporting the WiFi and the LTE at the same time, in order to improve the reliability and the throughput, an MUCC relationship may be established between the at least two UEs, that is, one UE of the at least two UEs needs to send data or receive data, and another UE other than the one UE may support and assist the one UE to perform communication. In the present invention, the one UE is named beneficial UE, served UE, or assisted UE, and the another UE other than the one UE is named support UE, serving UE, or assisting UE. The foregoing naming of the UEs is only an example taken in the present invention, and the naming of the UEs in the present invention includes but is not limited to the foregoing naming example.

Taking a support UE and a beneficial UE as an example, the beneficial UE may be a final data sender of uplink data or a final receiver of downlink data (from a cellular perspective). For a certain RB, generally, only one beneficial UE exists. The support UE is a UE configured to assist the beneficial UE to perform data relay. For a certain RB of the beneficial UE, multiple support UEs may exist.

Taking a support UE and a beneficial UE as an example, the concepts of the beneficial UE and the support UE are seen from the perspective of an RB of the beneficial UE, for example, a UE1 and a UE2 form MUCC, and they can assist and communicate with each other; in this way, from the perspective of a certain RB of the UE1, the UE2 may support the RB of the UE1, so that the UE1 is a beneficial UE, and the UE2 is a support UE. At the same time, the UE1 may also support a certain RB of the UE2, and from the perspective of the RB of the UE2, the UE2 is a beneficial UE, and the UE1 is a support UE.

Taking a support UE and a beneficial UE as an example, when the foregoing UEs are in a same short-distance connection range, a network may send downlink data to the foregoing support UE and beneficial UE, respectively (an optimized method is that the network scheduler always selects a UE with a best radio link condition at that time to send the data), and when the network sends the downlink data to the support UE, the support UE receives the data and sends the data to the beneficial UE through short-distance communication (such as the WiFi). Certainly, the data may also directly arrive at the beneficial UE, and the beneficial UE performs data combination. Similarly, uplink data of the beneficial UE may also be sent to the network through the beneficial UE itself or another support UE, and then the network performs data combination to complete cooperative communication between the UEs.

The reliability and throughput of communication of the beneficial UE may be improved through the assisted transmission of the support UE.

In embodiments provided in the present invention, an entity performing cooperative communication may be any entity in an access network or a core network, for example, an eNB, an S-GW, or a PGW in LTE, and for another example, a Node B, an RNC, an SGSN, or a GGSN in UMTS. Here, a base station in LTE is taken as an example to describe the solutions.

### Embodiment 1

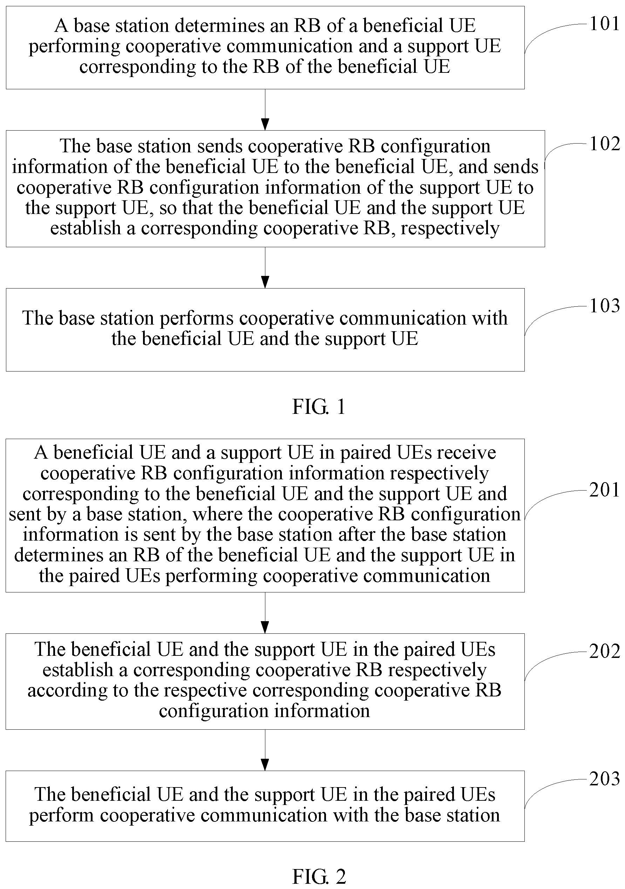

As shown in FIG. 1, an embodiment of the present invention provides a method for establishing an RB, which is applied to a base station side. The method includes the following steps:
101: A base station determines an RB of a beneficial UE performing cooperative communication and a support UE corresponding to the RB of the beneficial UE.

In a conventional process of normal communication of a network, if a UE needs to perform a service such as data uploading after accessing an access network, the UE sends a non-access stratum (NAS) message for requesting establishment of a bearer to a core network device through a base station, and after receiving the NAS message, the core network device instructs the base station to establish an RB for the UE, so as to perform a relevant service. When an environment where the UE is located are poor, a signal is not good, and a relevant service cannot be normally performed, the UE may perform multiple users cooperative communication as a beneficial UE, and a support UE with a good signal that is near the beneficial UE forwards relevant service information in the network for the beneficial UE, so as to perform the relevant service.

The base station may determine the RB of the beneficial UE performing cooperative communication and the corresponding support UE according to a message that carries a pairing identifier and is sent by the beneficial UE and the support UE, or the base station determines the RB of the beneficial UE performing cooperative communication and the corresponding support UE according to a message that carries a user identifier of the beneficial UE and is sent by the support UE, or the base station determines the RB of the beneficial UE performing cooperative communication and the corresponding support UE according to location information of the UE, a type of the UE, or channel information of the UE.

102: The base station sends cooperative RB configuration information of the beneficial UE to the beneficial UE, and sends cooperative RB configuration information of the support UE to the support UE, so that the beneficial UE and the support UE establish a corresponding cooperative RB, respectively.

The base station may send the corresponding cooperative RB configuration information to the beneficial UE after determining the beneficial UE performing cooperative communication, so that the beneficial UE establishes the corresponding cooperative RB, and then, send the corresponding cooperative RB configuration information to the corresponding support UE after determining the support UE corresponding to the RB of the beneficial UE, so that the corresponding support UE establishes the corresponding cooperative RB, so as to perform cooperative communication. Optionally, the base station may also send the cooperative RB configuration information of the beneficial UE and the cooperative RB configuration information of the support UE to the beneficial UE and the corresponding support UE, respectively, after determining the RB of the beneficial UE and the support UE thereof, so that the beneficial UE and the corresponding support UE establish the corresponding cooperative RB.

103: The base station performs cooperative communication with the beneficial UE and the support UE.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

As shown in FIG. 2, an embodiment of the present invention provides a method for establishing an RB, which is applied to a paired UE side. The method includes the following steps:
201: A beneficial UE and a support UE in paired UEs receive cooperative RB configuration information respectively corresponding to the beneficial UE and the support UE and sent by a base station, where the cooperative RB configuration information is sent by the base station after the base station determines an RB of the beneficial UE and the support UE in the paired UEs performing cooperative communication.

The paired UEs include one beneficial UE and at least one support UE, and the beneficial UE and the support UE in the paired UEs are UEs performing cooperative communication that are determined by the base station. The base station sends the cooperative RB configuration information of the beneficial UE to the beneficial UE in the paired UEs and sends the cooperative RB configuration information of the support UE to the support UE after determining the RB of the beneficial UE and the support UE in the paired UEs performing cooperative communication. A sequence of sending the corresponding cooperative RB configuration information to the beneficial UE and the support UE by the base station is not limited. The beneficial UE and the support UE receive the cooperative RB configuration information respectively corresponding to the beneficial UE and the support UE and sent by the base station.

The base station may send the corresponding cooperative RB configuration information to the beneficial UE after determining the beneficial UE performing cooperative communication, so that the beneficial UE establishes a corresponding cooperative RB, and then, send the corresponding cooperative RB configuration information to the corresponding support UE after determining a support UE corresponding to the RB of the beneficial UE, so that the corresponding support UE establishes a corresponding cooperative RB, so as to perform cooperative communication. Optionally, the base station may also send the corresponding cooperative RB configuration information of the beneficial UE and the cooperative RB configuration information of the support UE to the beneficial UE and the corresponding support UE, respectively, after determining the RB of the beneficial UE and the support UE thereof.

202: The beneficial UE and the support UE in the paired UEs establish a corresponding cooperative RB respectively according to the respective corresponding cooperative RB configuration information.

The beneficial UE configures the cooperative RB of the beneficial UE according to the cooperative RB configuration information of the beneficial UE and establishes the cooperative RB of the beneficial UE; and the support UE configures the cooperative RB of the support UE according to the cooperative RB configuration information of the support UE, and establishes the cooperative RB of the support UE.

203: The beneficial UE and the support UE in the paired UEs perform cooperative communication with the base station.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

Embodiments of the present invention provide a method, an apparatus, and a system for establishing a radio bearer. A base station determines an RB of a beneficial UE performing cooperative communication and a corresponding support UE, and sends configured corresponding cooperative RB configuration information to the beneficial UE and the corresponding support UE, so that the beneficial UE and the corresponding support UE establish a corresponding cooperative RB; therefore, a cooperative communication group is formed, and cooperative communication may be performed.

### Embodiment 2

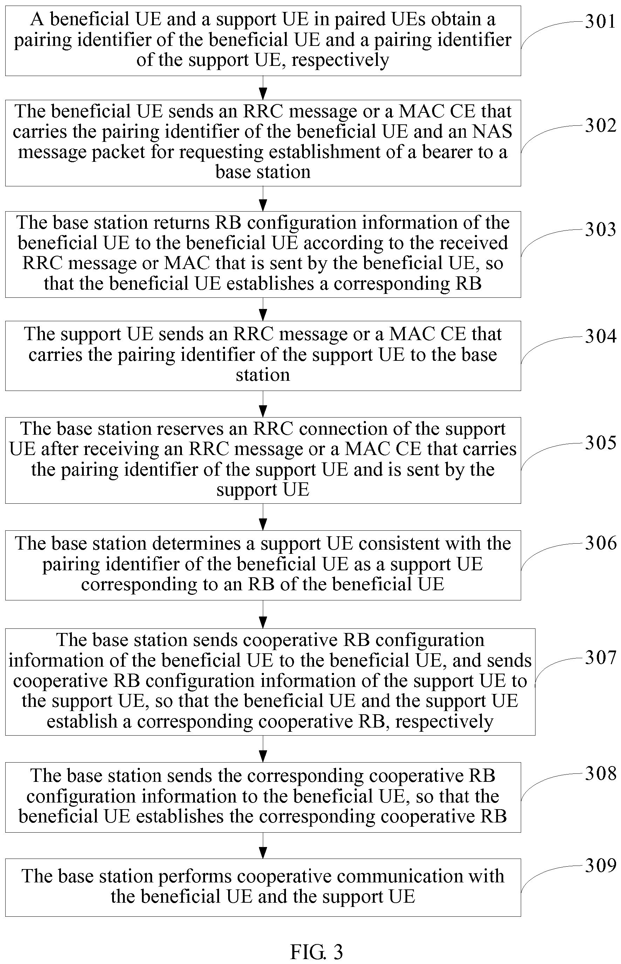

An example of the present invention provides a method for establishing a radio bearer. A base station may determine, according to a message that carries a pairing identifier and is sent by a beneficial UE and a support UE, an RB of the beneficial UE performing cooperative communication and a corresponding support UE. As shown in FIG. 3, the method includes the following steps:
301: A beneficial UE and a support UE in paired UEs obtain a pairing identifier of the beneficial UE and a pairing identifier of the support UE, respectively.

When the beneficial UE is close to the support UE, the beneficial UE may negotiate with the support UE to obtain the pairing identifier of the beneficial UE performing cooperative communication and the pairing identifier of the support UE, respectively. Alternatively, a user may perform negotiation and configure the pairing identifier of the beneficial UE performing cooperative communication and the pairing identifier of the support UE for the beneficial UE and the support UE. Here, the pairing identifier may include a random number, a subscriber number, a uniform group-RNTI, or the like of any one of the beneficial UE and the support UE.

302: The beneficial UE sends an RRC message or a MAC CE that carries the pairing identifier of the beneficial UE and an NAS message packet for requesting establishment of a bearer to a base station.

In the prior art, when the beneficial UE and the support UE do not establish a conventional RB with the base station and are not in an RRC connection state, and when the beneficial UE needs to perform a service and establish a bearer, the beneficial UE sends the NAS message for requesting establishment of a bearer to a core network device through the base station, and after receiving the NAS message, the core network device instructs the base station to establish a conventional RB for the beneficial UE. Here, in order to send the NAS message for requesting establishment of a bearer that is initiated by the beneficial UE to a core network, the beneficial UE needs to exchange several RRC messages with the base station, and finally packages and encapsulates the NAS message in an RRC message and sends the message to the base station, and then, the base station parses the RRC message to obtain the NAS message, and then transparently forwards the NAS message to the core network. The beneficial UE sends multiple RRC messages in this process, and may send the pairing identifier of the beneficial UE to the base station in any one of the RRC messages, which may specifically be an RRC connection request message or an RRC connection establishment completion message.

Optionally, when the beneficial UE and the support UE have established a conventional RB with base station and are in an RRC connection state, the beneficial UE may directly send the RRC message or the MAC CE that carries the pairing identifier of the beneficial UE to the base station.

303: The base station returns RB configuration information of the beneficial UE to the beneficial UE according to the received RRC message or MAC CE that is sent by the beneficial UE, so that the beneficial UE establishes a corresponding RB.

Optionally, when the beneficial UE and the support UE do not establish a conventional RB with the base station and are not in an RRC connection state, after parsing the RRC message to obtain the NAS message for requesting establishment of a bearer, the base station forwards the message to a core network device, and after receiving the NAS message, the core network device instructs the base station to establish a bearer for the beneficial UE. At this time, the base station may send corresponding conventional RB configuration information to the beneficial UE, so that the beneficial UE establishes a corresponding conventional RB; and the base station may also send corresponding cooperative RB configuration information to the beneficial UE, so that the beneficial UE establishes a corresponding cooperative RB, which is not limited herein.

When the beneficial UE and the support UE have established a conventional RB with the base station and are in an RRC connection state, the base station may return cooperative RB configuration information of the beneficial UE to the beneficial UE according to the received RRC message or MAC CE that is sent by the beneficial UE, or may not return cooperative RB configuration information of the beneficial UE.

304: The support UE sends an RRC message or a MAC CE (Medium Access Control Control Element, medium access control control element) that carries the pairing identifier of the support UE to the base station.

When the beneficial UE and the support UE do not establish a conventional RB with the base station and are not in an RRC connection state, the support UE itself has no service, and after the support UE negotiates the pairing identifier with the beneficial UE, a TAU (Track area update, tracking area update) procedure is triggered by an application layer and an RRC connection is established. In the TAU procedure, the pairing identifier of the support UE is carried through the RRC message or the MAC CE and is sent to the base station. In conventional LTE, TAU is a location update message periodically sent by a UE to a core network, and the core network does not establish a bearer for the UE after receiving the message. Here, for the support UE in cooperative communication, a core network bearer does not need to be established; therefore, here, the negotiated pairing identifier of the support UE may be notified to the base station by using an existing TAU procedure. Certainly, another existing NAS procedure for establishing a bearer by the core network may replace the TAU procedure.

When the beneficial UE and the support UE have already established a conventional RB with the base station and are in an RRC connection state, the support UE may directly send an RRC message or a MAC CE that carries the pairing identifier of the support UE to the base station.

305: The base station reserves an RRC connection of the support UE after receiving an RRC message or a MAC CE that carries the pairing identifier of the support UE and is sent by the support UE.

When the beneficial UE and the support UE do not establish a conventional RB with the base station and are not in an RRC connection state, after the TAU procedure ends, in conventional LTE, the base station releases an RRC link; however, because, at this time, the support UE carries the pairing identifier in the previous RRC message to the base station, the base station knows that the UE establishes the RRC connection for cooperative communication, and therefore does not release the RRC link quickly but stores context of the UE, and uses the pairing identifier of the support UE to match a beneficial UE paired with the support UE.

When the beneficial UE and the support UE have established a conventional RB with the base station and are in an RRC connection state, the RRC connection is always reserved.

Here, it should be noted that, a sequence of steps 302 and 303, and steps 304 and 305 is not limited, and FIG. 3 only shows one situation: steps 302 and 303 are performed before steps 304 and 305; optionally, steps 302 and 303 may also be performed after steps 304 and 305.

306: The base station determines a support UE consistent with the pairing identifier of the beneficial UE as a support UE corresponding to an RB of the beneficial UE.

The base station may receive a bearer establishment request that carries a pairing identifier and is sent by the beneficial UE, and RRC messages or MAC CEs that carry the pairing identifier of the support UE and are sent by many support UEs. The base station uses the support UE consistent with the pairing identifier of the beneficial UE as the support UE corresponding to the RB of the beneficial UE; in this way, the base station determines the RB of the beneficial UE performing cooperative communication and the corresponding support UE.

307: The base station sends cooperative RB configuration information of the beneficial UE to the beneficial UE, and sends cooperative RB configuration information of the support UE to the support UE, so that the beneficial UE and the support UE establish a corresponding cooperative RB, respectively.

The base station sends the corresponding cooperative RB configuration information to the corresponding support UE after determining the RB of the beneficial UE performing cooperative communication and the corresponding support UE, so that the corresponding support UE establishes the corresponding cooperative RB, and the support UE receives, through the cooperative RB, a part of service data of the beneficial UE that is sent by the base station, so as to perform cooperative communication.

If the RB configuration information sent by the base station to the beneficial UE in step 303 is the corresponding cooperative RB configuration information, the beneficial UE has established the corresponding cooperative RB, and at this time, both the beneficial UE and the corresponding support UE establish the corresponding cooperative RB, and cooperative communication may be performed.

If the RB configuration information sent by the base station to the beneficial UE in step 303 is corresponding conventional RB configuration information, a conventional RB is established by the beneficial UE, and the conventional RB does not support cooperative communication, and at this time, step 308 needs to be performed.

308: The base station sends the corresponding cooperative RB configuration information to the beneficial UE, so that the beneficial UE establishes the corresponding cooperative RB.

The base station sends the corresponding cooperative RB configuration information to the beneficial UE, and the beneficial UE updates the conventional RB established by the beneficial UE to a cooperative RB after receiving the RB configuration information. So far, both the beneficial UE and the corresponding support UE establish the corresponding cooperative RB, and cooperative communication may be performed.

If step 308 exists, a sequence of step 308 and step 307 is not limited.

It should be noted that, when the beneficial UE and the support UE have established a conventional RB with the base station and are in an RRC connection state, the RRC message or the MAC CE that is sent by the beneficial UE to the base station in step 302 may further carry index information of an RB performing cooperative communication; in this way, the base station may also determine, according to the index information of the RB, the RB of the beneficial UE performing cooperative communication in step 306, and then, use a UE with a pairing identifier that is consistent with the pairing identifier of the beneficial UE as the support UE corresponding to the RB of the beneficial UE performing cooperative communication.

309: The base station performs cooperative communication with the beneficial UE and the support UE.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

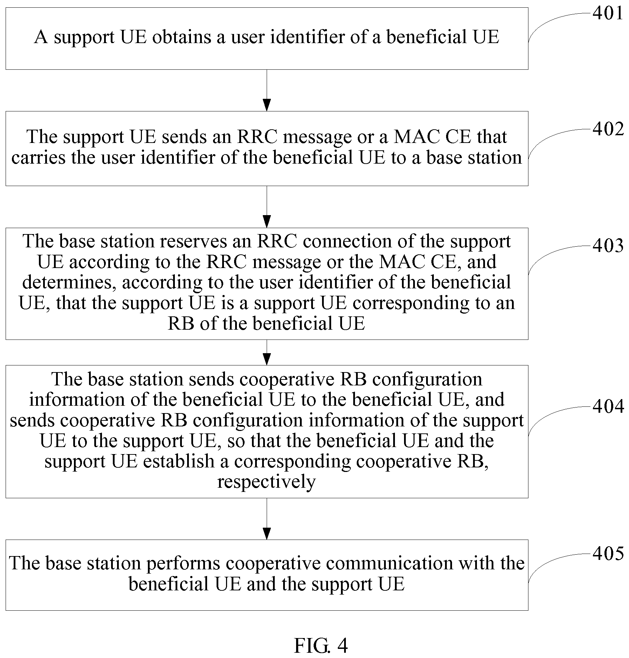

An example of the present invention further provides a method for establishing a radio bearer. A base station may determine, according to a message that carries a user identifier of a beneficial UE and is sent by a support UE, an RB of the beneficial UE performing cooperative communication and a corresponding support UE. As shown in FIG. 4, the method includes the following steps:
401: A support UE obtains a user identifier of a beneficial UE.
402: The support UE sends an RRC message or a MAC CE that carries the user identifier of the beneficial UE to a base station.
403: The base station reserves an RRC connection of the support UE according to the RRC message or the MAC CE, and determines, according to the user identifier of the beneficial UE, that the support UE is a support UE corresponding to an RB of the beneficial UE.

The user identifier of the beneficial UE includes a cell radio network temporary identifier C-RNTI or a subscriber number of the beneficial UE.

404: The base station sends cooperative RB configuration information of the beneficial UE to the beneficial UE, and sends cooperative RB configuration information of the support UE to the support UE, so that the beneficial UE and the support UE establish a corresponding cooperative RB, respectively.

The sequence of sending the cooperative RB configuration information of the beneficial UE to the beneficial UE and sending the cooperative RB configuration information of the support UE to the corresponding support UE by the base station is not limited. The beneficial UE and the corresponding support UE establish the corresponding cooperative RB after receiving the respective cooperative RB configuration information.

405: The base station performs cooperative communication with the beneficial UE and the support UE.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

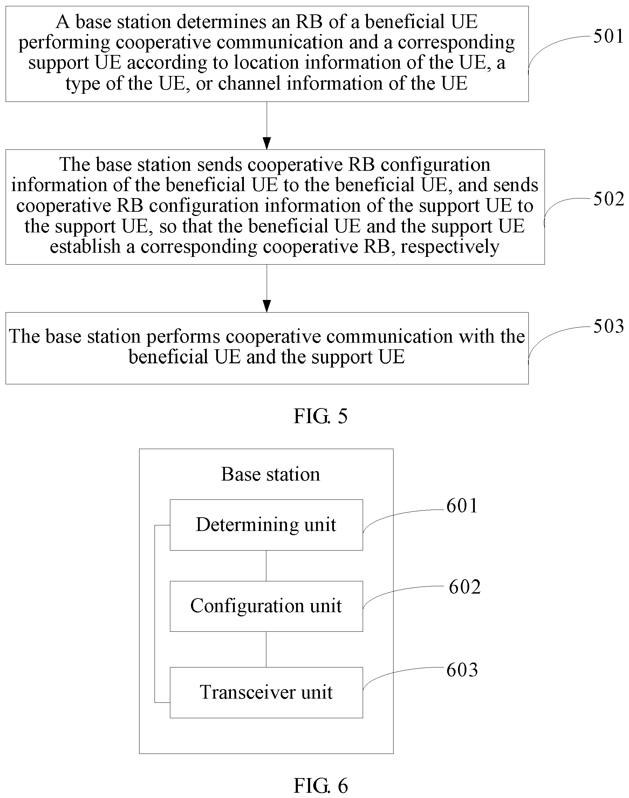

An embodiment of the present invention further provides a method for establishing a radio bearer. A base station may determine an RB of a beneficial UE performing cooperative communication and a corresponding support UE according to location information of the UE, a type of the UE, or channel information of the UE. As shown in FIG. 5, the method includes the following steps:
501: A base station determines an RB of a beneficial UE performing cooperative communication and a corresponding support UE according to location information of the UE, a type of the UE, or channel information of the UE.

The base station may directly determine the RB of the beneficial UE performing cooperative communication and the corresponding support UE according to location information of all UEs served by the base station, a type of a UE, or channel information of the UE. For example, the base station may determine a UE of which a distance to the beneficial UE is smaller than a preset threshold as the support UE corresponding to the RB of the beneficial UE, or determine a UE with a good channel quality as the support UE corresponding to the RB of the beneficial UE; or a dedicated support UE is set in a cell covered by the base station, and the base station may determine the dedicated support UE as the support UE corresponding to the RB of the beneficial UE.

Optionally, before determining the RB of the beneficial UE performing cooperative communication and the corresponding support UE, the base station may further receive an RRC message or a MAC CE that is sent by the beneficial UE, and the base station determines, according to the received RRC message or MAC CE, the RB of the beneficial UE performing cooperative communication, and determines the RB of the beneficial UE performing cooperative communication and the corresponding support UE according to the location information of the UE, the type of the UE, or the channel information of the UE.

Optionally, before determining the RB of the beneficial UE performing cooperative communication and the corresponding support UE, the base station may further receive cooperative communication UE information sent by a core network device, where the cooperative communication UE information includes information of the beneficial UE that needs to perform cooperative communication; and the base station may determine, according to the cooperative communication UE information, the beneficial UE performing cooperative communication, and send RB configuration information of the beneficial UE to the beneficial UE, so that the beneficial UE establishes a corresponding RB, and then, the base station determines the RB of the beneficial UE and the corresponding support UE according to the location information of the UE, the type of the UE, or channel information of the UE.

502: The base station sends cooperative RB configuration information of the beneficial UE to the beneficial UE, and sends cooperative RB configuration information of the support UE to the support UE, so that the beneficial UE and the support UE establish a corresponding cooperative RB, respectively.

The sequence of sending the cooperative RB configuration information of the beneficial UE to the beneficial UE and sending the cooperative RB configuration information of the support UE to the corresponding support UE by the base station is not limited. The beneficial UE and the corresponding support UE establish the corresponding cooperative RB after receiving the respective cooperative RB configuration information.

Herein, it should be noted that, in step 502, when receiving the cooperative communication UE information and determining the beneficial UE performing cooperative communication, the base station sends the RB configuration information of the beneficial UE to the beneficial UE, here, the RB configuration information of the beneficial UE may be conventional RB configuration information or the cooperative RB configuration information. If the RB configuration information is conventional RB configuration information, the beneficial UE establishes a conventional RB, and the base station sends the cooperative RB configuration information of the beneficial UE to the beneficial UE, and sends the cooperative RB configuration information of the support UE to the support UE respectively after determining the support UE corresponding to the RB of the beneficial UE performing cooperative communication. If the RB configuration information of the beneficial UE that is sent by the base station to the beneficial UE is the cooperative RB configuration information, the beneficial UE establishes the corresponding cooperative RB, and the base station sends the cooperative RB configuration information of the support UE to the corresponding support UE after determining the support UE corresponding to the RB of the beneficial UE performing cooperative communication, so that the support UE establishes the corresponding cooperative RB.

503: The base station performs cooperative communication with the beneficial UE and the support UE.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

In a process of establishing a cooperative RB by using the methods provided by all the foregoing embodiments, after receiving the cooperative RB configuration information sent by the base station, the support UE may reject to establish the cooperative RB due to absence of a supporting capability of the support UE, a user policy or a poor state of a short-distance link, or the like, and send a cooperative RB establishment rejection message to the base station. The base station may perform cooperative communication with the support UE and the beneficial UE that establish the cooperative RB.

An embodiment of the present invention further provides a base station. As shown in FIG. 6, the base station includes a determining unit 601, a configuration unit 602, and a transceiver unit 603.

The determining unit 601 is configured to determine an RB of a beneficial UE performing cooperative communication and a support UE corresponding to the RB of the beneficial UE.

In a conventional process of normal communication of a network, if a UE needs to perform a service such as data uploading after accessing an access network, the UE sends an NAS message for requesting establishment of a bearer to a core network device through a base station, and after receiving the NAS message, the core network device instructs the base station to establish an RB for the UE, so as to perform a relevant service. When an environment where the UE is located are poor, a signal is not good, and a relevant service cannot be normally performed, the UE may perform multiple users cooperative communication as a beneficial UE, and a support UE with a good signal that is near the beneficial UE forwards relevant service information in the network for the beneficial UE, so as to perform the relevant service.

The determining unit 601 of the base station may determine the RB of the beneficial UE performing cooperative communication and the corresponding support UE according to a message that carries a pairing identifier and is sent by the beneficial UE and the support UE, or the determining unit 601 of the base station determines the RB of the beneficial UE performing cooperative communication and the corresponding support UE according to a message that carries a user identifier of the beneficial UE and is sent by the support UE, or the determining unit 601 of the base station determines the RB of the beneficial UE performing cooperative communication and the corresponding support UE according to location information of the UE, a type of the UE, or channel information of the UE. For example, the determining unit 601 of the base station may determine a UE of which a distance to the beneficial UE is smaller than a preset threshold as the support UE corresponding to the RB of the beneficial UE, or determine a UE with a good channel quality as the support UE corresponding to the RB of the beneficial UE; or a dedicated support UE is set in a cell covered by the base station, and the determining unit 601 of the base station may determine the dedicated support UE as the support UE corresponding to the RB of the beneficial UE.

The configuration unit 602 is configured to configure cooperative RB configuration information of the beneficial UE and cooperative RB configuration information of the support UE respectively for the beneficial UE and the support UE that are determined by the determining unit 601.

The transceiver unit 603 is configured to send the cooperative RB configuration information of the beneficial UE that is configured by the configuration unit 602 to the beneficial UE, and send the cooperative RB configuration information of the support UE that is configured by the configuration unit 602 to the support UE, so that the beneficial UE and the support UE establish a corresponding cooperative RB, respectively.

The transceiver unit 603 is further configured to transmit service data of the beneficial UE with the beneficial UE and the support UE to perform cooperative communication.

The beneficial UE and the corresponding support UE establish the corresponding cooperative RB, and then the beneficial UE and the support UE establish a cooperative communication group. In the cooperative communication group, a support UE with a good signal may receive, through a corresponding cooperative RB, a part or all of data sent by the base station to the beneficial UE, and then forward the data to the beneficial UE through a short-distance communication protocol between the UEs, and after receiving the forwarded data, the beneficial UE combines, through a cooperative layer in the corresponding cooperative RB, the data forwarded by the support UE and the data received by the beneficial UE itself together, which may improve the throughput and the reliability.

In an example provided in the present invention, the base station may determine the RB of the beneficial UE performing cooperative communication and the corresponding support UE according to the message that carries the pairing identifier and is sent by the beneficial UE and the support UE, or the base station determines the RB of the beneficial UE performing cooperative communication and the corresponding support UE according to the message that carries the user identifier of the beneficial UE and is sent by the support UE, or the base station determines the RB of the beneficial UE performing cooperative communication and the corresponding support UE according to the location information of the UE, the type of the UE, or the channel information of the UE.

In a situation in which the base station determines the RB of the beneficial UE performing cooperative communication and the corresponding support UE according to the message that carries the pairing identifier and is sent by the beneficial UE and the support UE:

When the beneficial UE and the support UE do not establish a conventional RB with the base station and are not in an RRC connection state, the transceiver unit 603 is further configured to receive an RRC message that carries a pairing identifier of the beneficial UE and an NAS message packet for requesting establishment of a bearer and is sent by the beneficial UE; the configuration unit 602 is further configured to send RB configuration information of the beneficial UE to the beneficial UE according to the RRC message sent by the beneficial UE and received by the transceiver unit 603; the transceiver unit 603 is further configured to send the RB configuration information of the beneficial UE that is configured by the configuration unit 602 to the beneficial UE, so that the beneficial UE establishes the corresponding cooperative RB; the transceiver unit 603 is further configured to receive a radio resource control RRC message or a medium access control layer control element MAC CE that carries a pairing identifier of at least one UE and is sent by the at least one UE; a processing unit is configured to reserve an RRC connection of the at least one UE and store the pairing identifier of the at least one UE according to the RRC message or the MAC CE that is sent by the at least one UE and received by the transceiver unit 603; and the determining unit 601 is configured to determine a UE corresponding to a pairing identifier, which is consistent with the pairing identifier of the beneficial UE in the pairing identifier of the at least one UE that is received by the transceiver unit, as the support UE corresponding to the RB of the beneficial UE.

When the beneficial UE and the support UE have established a conventional RB with the base station and are in RRC connection state, the transceiver unit 603 is further configured to receive RRC messages or MAC CEs that carry pairing identifiers and that are sent by the beneficial UE and other UEs; and the determining unit 601 is configured to determine, according to the pairing identifier received by the transceiver unit 603, a UE with a pairing identifier that is consistent with the pairing identifier of the beneficial UE in the other UEs as the support UE corresponding to the RB of the beneficial UE. Optionally, the RRC message or the MAC CE that is sent by the beneficial UE and received by the transceiver unit 603 further carries index information of an RB performing cooperative communication; and the determining unit 601 is further configured to determine, according to the index information of the RB, the RB of the beneficial UE performing cooperative communication, and use a UE with a pairing identifier that is consistent with the pairing identifier of the beneficial UE as the support UE corresponding to the RB of the beneficial UE performing cooperative communication.

When the RB configuration information of the beneficial UE that is configured by the base station for the beneficial UE according to the RRC message or the MAC CE that is received by the transceiver unit 603 is the cooperative RB configuration information, the configuration unit 602 is configured to configure the cooperative RB configuration information of the beneficial UE for the beneficial UE according to the RRC message or the MAC CE that is received by the transceiver unit 603; the transceiver unit 603 is configured to send the cooperative RB configuration information of the beneficial UE that is configured by the configuration unit 602 to the beneficial UE, so that the beneficial UE establishes the corresponding cooperative RB; the configuration unit 602 is further configured to configure the cooperative RB configuration information of the support UE of the support UE after the determining unit 601 determines the support UE corresponding to the RB of the beneficial UE; and the transceiver unit 603 is configured to send the cooperative RB configuration information of the support UE that is configured by the configuration unit 602 to the support UE, so that the support UE establishes the corresponding cooperative RB.

When the RB configuration information of the beneficial UE that is configured by the base station for the beneficial UE according to the RRC message or the MAC CE that is received by the transceiver unit 603 is conventional RB configuration information, the configuration unit 602 is further configured to: after the determining unit 601 determines the support UE corresponding to the RB of the beneficial UE performing cooperative communication, configure the cooperative RB configuration information of the beneficial UE and the cooperative RB configuration information of the support UE respectively for the beneficial UE and the support UE that are determined by the determining unit 601; and the transceiver unit 603 is further configured to send the cooperative RB configuration information of the beneficial UE that is configured by the configuration unit 602 to the beneficial UE and send the cooperative RB configuration information of the support UE that is configured by the configuration unit 602 to the support UE, so that the beneficial UE and the support UE establish the corresponding cooperative RB, respectively.

The pairing identifier includes a random number, a subscriber number of any one of the beneficial UE and the support UE or a uniform group radio network temporary identifier group-RNTI.

In a situation in which the base station determines the RB of the beneficial UE performing cooperative communication and the corresponding support UE according to the message that carries the user identifier of the beneficial UE and is sent by the support UE:

The transceiver unit 603 is further configured to receive an RRC message or a MAC CE that carries the user identifier of the beneficial UE and is sent by the support UE; and the determining unit 601 is configured to reserve an RRC connection of the support UE according to the RRC message or the MAC CE that is received by the transceiver unit 603, and determine, according to the user identifier of the beneficial UE, that the support UE is the support UE corresponding to the RB of the beneficial UE, where the user identifier of the beneficial UE includes a cell radio network temporary identifier C-RNTI or a subscriber number of the beneficial UE.

In a situation in which the base station determines the RB of the beneficial UE performing cooperative communication and the corresponding support UE according to the location information of the UE, the type of the UE, or the channel information of the UE:

The determining unit 601 is further configured to determine the RB of the beneficial UE performing cooperative communication and the corresponding support UE according to the location information of the UE, the type of the UE, or the channel information of the UE.

Optionally, the transceiver unit 603 is further configured to receive cooperative communication UE information sent by a core network device, where the cooperative communication UE information includes information of the beneficial UE that needs to perform cooperative communication; the determining unit 601 is further configured to determine, according to the cooperative communication UE information, the beneficial UE performing cooperative communication; the configuration unit 602 is further configured to configure the RB configuration information of the beneficial UE for the beneficial UE determined by the determining unit 601; the transceiver unit 603 is further configured to send the RB configuration information of the beneficial UE that is configured by the configuration unit 602 to the beneficial UE, so that the beneficial UE establishes the corresponding RB; and the determining unit 601 is further configured to determine, according to the location information of the UE, the type of the UE, or the channel information of the UE, the support UE corresponding to the RB of the beneficial UE.

Optionally, the transceiver unit 603 is further configured to receive an RRC message or a MAC CE that carries a cooperative communication request and sent by the beneficial UE; and the determining unit 601 is further configured to determine, according to the RRC message or the MAC CE that is sent by the beneficial UE and received by the transceiver unit 603, the RB of the beneficial UE performing cooperative communication, and determine the RB of the beneficial UE performing cooperative communication and the corresponding support UE according to the location information of the UE, the type of the UE, or the channel information of the UE. The configuration unit 602 configures the cooperative RB configuration information of the beneficial UE for the beneficial UE according to the RRC message or the MAC CE that is sent by the beneficial UE and received by the transceiver unit 603; the transceiver unit 603 is configured to send the cooperative RB configuration information of the beneficial UE that is configured by the configuration unit 602 to the beneficial UE, so that the beneficial UE establishes the corresponding cooperative RB; the configuration unit 602 is further configured to configure the cooperative RB configuration information of the support UE for the support UE after the determining unit 601 determines the support UE corresponding to the RB of the beneficial UE; and the transceiver unit 603 is configured to send the cooperative RB configuration information of the support UE that is configured by the configuration unit 602 to the support UE, so that the support UE establishes the corresponding cooperative RB; or the configuration unit 602 is further configured to: after the determining unit 601 determines the support UE corresponding to the RB of the beneficial UE performing cooperative communication, configure the cooperative RB configuration information of the beneficial UE and the cooperative RB configuration information of the support UE respectively for the beneficial UE and the support UE that are determined by the determining unit 601; and the transceiver unit 603 is further configured to send the cooperative RB configuration information of the beneficial UE that is configured by the configuration unit 602 to the beneficial UE, and send the cooperative RB configuration information of the support UE that is configured by the configuration unit 602 to the support UE, so that the beneficial UE and the support UE establish the corresponding cooperative RB, respectively.

Optionally, the transceiver unit 603 is further configured to receive a cooperative RB configuration rejection message sent by the support UE, where the cooperative RB configuration rejection message is fed back by the support UE to the base station due to absence of a supporting capability of the support UE, or a user policy or a poor state of a short-distance link.

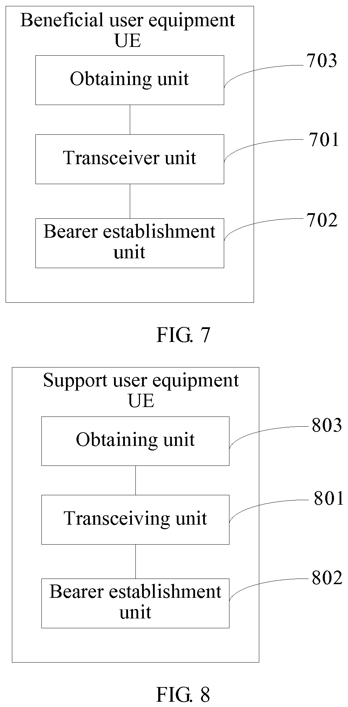

An embodiment of the present invention further provides paired UEs, which include: one beneficial UE and at least one support UE. As shown in FIG. 7, the beneficial UE includes a transceiver unit 701 and a bearer establishment unit 702, and as shown in FIG. 8, the support UE includes a transceiver unit 801 and a bearer establishment unit 802.

The transceiver unit 701 of the beneficial UE is configured to receive cooperative RB configuration information of the beneficial UE that is sent by a base station; and the transceiver unit 801 of the support UE is configured to receive cooperative RB configuration information of the support UE that is sent by the base station, where the cooperative RB configuration information is sent by the base station after the base station determines an RB of the beneficial UE and the support UE in the paired UEs performing cooperative communication.

The bearer establishment unit 702 of the beneficial UE is configured to establish a corresponding cooperative RB according to the cooperative RB configuration information received by the transceiver unit of the beneficial UE; and the bearer establishment unit 802 of the support UE is configured to establish a corresponding cooperative RB according to the cooperative RB configuration information received by the transceiver unit of the support UE.

The transceiver unit 701 of the beneficial UE and the transceiver unit 801 of the support UE perform cooperative communication with the base station.

The beneficial UE further includes an obtaining unit 703, and the support UE further includes an obtaining unit 803.

The obtaining unit 703 of the beneficial UE is configured to obtain a pairing identifier of the beneficial UE; and the obtaining unit 803 of the support UE is configured to obtain a pairing identifier of the support UE.

When the beneficial UE is close to the support UE, the beneficial UE may negotiate with the support UE to obtain the pairing identifier of the beneficial UE performing cooperative communication and the pairing identifier of the support UE, respectively. Alternatively, a user may perform negotiation and configure the pairing identifier of the beneficial UE performing cooperative communication and the pairing identifier of the support UE for the beneficial UE and the support UE. Here, the pairing identifier may include a random number, a subscriber number, a uniform group-RNTI, or the like of any one of the beneficial UE and the support UE.

The transceiver unit 701 of the beneficial UE is further configured to send a radio resource control RRC message carrying the pairing identifier of the beneficial UE that is obtained by the obtaining unit 703 of the beneficial UE and an NAS message packet for requesting establishment of a bearer to the base station, so that the base station returns RB configuration information of the beneficial UE to the beneficial UE according to the received RRC message sent by the beneficial UE; the transceiver unit 701 of the beneficial UE is further configured to receive the RB configuration information of the beneficial UE that is returned by the base station; and the bearer establishment unit 702 of the beneficial UE is further configured to establish a corresponding RB according to the RB configuration information of the beneficial UE that is received by the transceiver unit 701 of the beneficial UE.

The transceiver unit 801 of the support UE is further configured to send an RRC message or a medium access control layer control element MAC CE that carries the pairing identifier of the support UE to the base station, so that the base station reserves an RRC connection of the support UE, stores the pairing identifier of the support UE, and determines the support UE consistent with the pairing identifier of the beneficial UE as a support UE corresponding to the RB of the beneficial UE.

The transceiver unit 701 of the beneficial UE is further configured to receive the RB configuration information of the beneficial UE that is sent by the base station; and the bearer establishment unit 702 of the beneficial UE is further configured to establish the corresponding RB according to the RB configuration information of the beneficial UE that is received by the transceiver unit 701 of the beneficial UE, so that the base station determines, according to location information of the UE, a type of the UE, or channel information of the UE, the support UE corresponding to the RB of the beneficial UE. For example, the base station may determine a UE of which a distance to the beneficial UE is smaller than a preset threshold as the support UE corresponding to the RB of the beneficial UE, or determine a UE with a good channel quality as the support UE corresponding to the RB of the beneficial UE; or a dedicated support UE is set in a cell covered by the base station, and the base station may determine the dedicated support UE as the support UE corresponding to the RB of the beneficial UE.

The RB configuration information of the beneficial UE is sent by the base station after determining, according to received cooperative communication UE information sent by a core network device, the beneficial UE performing cooperative communication, where the cooperative communication UE information includes information of the beneficial UE that needs to perform cooperative communication.

The obtaining unit 703 of the beneficial UE is configured to obtain the pairing identifier of the beneficial UE; and the obtaining unit 803 of the support UE is configured to obtain the pairing identifier of the support UE. The transceiver unit 701 of the beneficial UE is further configured to send an RRC message or a MAC CE that carries the pairing identifier obtained by the obtaining unit of the beneficial UE to the base station; and the transceiver unit 801 of the support UE is further configured to send an RRC message or a MAC CE that carries the pairing identifier obtained by the obtaining unit of the support UE to the base station, so that the base station uses a UE with a pairing identifier that is consistent with the pairing identifier of the beneficial UE as the support UE corresponding to the RB of the beneficial UE. Optionally, the RRC message or the MAC CE that is sent by the transceiver unit 701 of the beneficial UE and the transceiver unit 801 of the support UE respectively to the base station further carries index information of an RB performing cooperative communication, so that the base station determines, according to the index information of the RB, the RB of the beneficial UE performing cooperative communication, and further, the base station uses a UE with a pairing identifier that is consistent with the pairing identifier of the beneficial UE as the support UE corresponding to the RB of the beneficial UE performing cooperative communication.

The pairing identifier includes a random number, a subscriber number of any one of the beneficial UE and the support UE or a uniform group radio network temporary identifier group-RNTI.

The transceiver unit 801 of the support UE is further configured to send an RRC message or a MAC CE that carries a user identifier of the beneficial UE to the base station, so that the base station reserves an RRC connection of the support UE according to the RRC message or the MAC CE, and determines, according to the user identifier of the beneficial UE, that the support UE is the support UE corresponding to the RB of the beneficial UE, where the user identifier of the beneficial UE includes a cell radio network temporary identifier C-RNTI or a subscriber number of the beneficial UE.

The transceiver unit 701 of the beneficial UE is further configured to send an RRC message or a MAC CE that carries a cooperative communication request to the base station, so that the base station determines, according to the received RRC message or MAC CE that is sent by the beneficial UE, the RB of the beneficial UE performing cooperative communication; and determines the RB of the beneficial UE performing cooperative communication and the corresponding support UE according to the location information of the UE, the type of the UE, or the channel information of the UE.

The transceiver unit 801 of the support UE in the paired UEs is further configured to feed back a cooperative RB configuration rejection message to the base station due to absence of a supporting capability of the support UE , or a user policy or a poor state of a short-distance link.

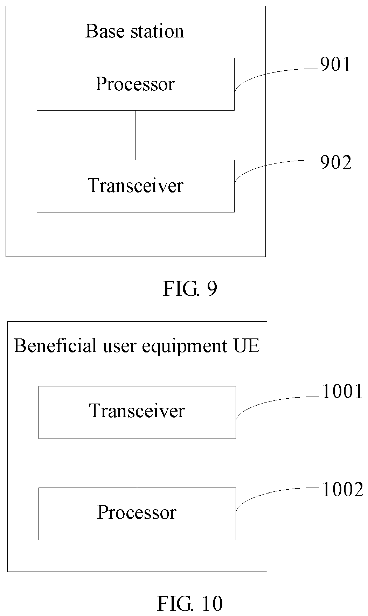

An embodiment of the present invention further provides a base station. As shown in FIG. 9, the base station includes a processor 901 and a transceiver 902.

The processor 901 is configured to determine an RB of a beneficial UE performing cooperative communication and a support UE corresponding to the RB of the beneficial UE.

In a conventional process of normal communication of a network, if a UE needs to perform a service such as data uploading after accessing an access network, the UE sends an NAS message for requesting establishment of a bearer to a core network device through a base station, and after receiving the NAS message, the core network device instructs the base station to establish an RB for the UE, so as to perform a relevant service. When an environment where the UE is located are poor, a signal is not good, and a relevant service cannot be normally performed, the UE may perform multiple users cooperative communication as a beneficial UE, and a support UE with a good signal that is near the beneficial UE forwards relevant service information in the network for the beneficial UE, so as to perform the relevant service.

The processor 901 of the base station may determine the RB of the beneficial UE performing cooperative communication and the corresponding support UE according to a message that carries a pairing identifier and is sent by the beneficial UE and the support UE, or the processor 901 of the base station determines the RB of the beneficial UE performing cooperative communication and the corresponding support UE according to a message that carries a user identifier of the beneficial UE and is sent by the support UE, or the processor 901 of the base station determines the RB of the beneficial UE performing cooperative communication and the corresponding support UE according to location information of the UE, a type of the UE, or channel information of the UE. For example, the processor 901 of the base station may determine a UE of which a distance to the beneficial UE is smaller than a preset threshold as the support UE corresponding to the RB of the beneficial UE, or determine a UE with a good channel quality as the support UE corresponding to the RB of the beneficial UE; or a dedicated support UE is set in a cell covered by the base station, and the processor 901 of the base station may determine the dedicated support UE as the support UE corresponding to the RB of the beneficial UE.

The processor 901 is configured to configure cooperative RB configuration information of the beneficial UE and cooperative RB configuration information of the support UE respectively for the beneficial UE and the support UE.

The transceiver 902 is configured to send the cooperative RB configuration information of the beneficial UE that is configured by the processor 901 to the beneficial UE, and send the cooperative RB configuration information of the support UE that is configured by the processor 901 to the support UE, so that the beneficial UE and the support UE establish a corresponding cooperative RB, respectively.

The transceiver 902 is further configured to transmit service data of the beneficial UE with the beneficial UE and the support UE to perform cooperative communication.

In a situation in which the base station determines the RB of the beneficial UE performing cooperative communication and the corresponding support UE according to the message that carries the pairing identifier and is sent by the beneficial UE and the support UE:

When the beneficial UE and the support UE do not establish a conventional RB with the base station and are not in an RRC connection state, the transceiver 902 is further configured to receive an RRC message that carries a pairing identifier of the beneficial UE and an NAS message packet for requesting establishment of a bearer and is sent by the beneficial UE; the processor 901 is further configured to send RB configuration information of the beneficial UE to the beneficial UE according to the RRC message sent by the beneficial UE and received by the transceiver 902; the transceiver 902 is further configured to send the RB configuration information of the beneficial UE that is configured by the processor 901 to the beneficial UE, so that the beneficial UE establishes the corresponding cooperative RB; the transceiver 902 is further configured to receive a radio resource control RRC message or a medium access control layer control element MAC CE that carries a pairing identifier of at least one UE and is sent by the at least one UE; a processing unit is configured to reserve an RRC connection of the at least one UE and store the pairing identifier of the at least one UE according to the RRC message or the MAC CE that is sent by the at least one UE and received by the transceiver 902; and the processor 901 is configured to determine a UE corresponding to a pairing identifier, which is consistent with the pairing identifier of the beneficial UE in the pairing identifier of the at least one UE that is received by the transceiver unit, as the support UE corresponding to the RB of the beneficial UE.

When the beneficial UE and the support UE have established a conventional RB with the base station and are in RRC connection state, the transceiver 902 is configured to receive RRC messages or MAC CEs that carry pairing identifiers and that are sent by the beneficial UE and other UEs; and the processor 901 is configured to determine, according to the pairing identifier received by the transceiver 902, a UE with a pairing identifier that is consistent with the pairing identifier of the beneficial UE in the other UEs as the support UE corresponding to the RB of the beneficial UE. Optionally, the RRC message or the MAC CE that is sent by the beneficial UE and received by the transceiver 902 further carries index information of an RB performing cooperative communication; and the processor 901 is further configured to determine, according to the index information of the RB, the RB of the beneficial UE performing cooperative communication, and use a UE with a pairing identifier that is consistent with the pairing identifier of the beneficial UE as the support UE corresponding to the RB of the beneficial UE performing cooperative communication.

When the RB configuration information of the beneficial UE that is configured by the base station for the beneficial UE according to the RRC message or the MAC CE that is received by the transceiver 902 is the cooperative RB configuration information, the processor 901 is configured to configure the cooperative RB configuration information of the beneficial UE for the beneficial UE according to the RRC message or the MAC CE that is received by the transceiver 902; the transceiver 902 is configured to send the cooperative RB configuration information of the beneficial UE that is configured by the processor 901 to the beneficial UE, so that the beneficial UE establishes the corresponding cooperative RB; the processor 901 is further configured to configure the cooperative RB configuration information of the support UE of the support UE after the processor 901 determines the support UE corresponding to the RB of the beneficial UE; and the transceiver 902 is configured to send the cooperative RB configuration information of the support UE that is configured by the processor 901 to the support UE, so that the support UE establishes the corresponding cooperative RB.

When the RB configuration information of the beneficial UE that is configured by the base station for the beneficial UE according to the RRC message or the MAC CE that is received by the transceiver 902 is conventional RB configuration information, the processor 901 is further configured to: after the processor 901 determines the support UE corresponding to the RB of the beneficial UE performing cooperative communication, configure the cooperative RB configuration information of the beneficial UE and the cooperative RB configuration information of the support UE respectively for the beneficial UE and the support UE that are determined by the processor 901; and the transceiver 902 is further configured to send the cooperative RB configuration information of the beneficial UE that is configured by the processor 901 to the beneficial UE and send the cooperative RB configuration information of the support UE that is configured by the processor 901 to the support UE, so that the beneficial UE and the support UE establish the corresponding cooperative RB, respectively.

The pairing identifier includes a random number, a subscriber number of any one of the beneficial UE and the support UE or a uniform group radio network temporary identifier group-RNTI.

In a situation in which the base station determines the RB of the beneficial UE performing cooperative communication and the corresponding support UE according to the message that carries the user identifier of the beneficial UE and is sent by the support UE:

The transceiver 902 is further configured to receive an RRC message or a MAC CE that carries the user identifier of the beneficial UE and is sent by the support UE; and the processor 901 is configured to reserve an RRC connection of the support UE according to the RRC message or the MAC CE that is received by the transceiver 902, and determine, according to the user identifier of the beneficial UE, that the support UE is the support UE corresponding to the RB of the beneficial UE, where the user identifier of the beneficial UE includes a cell radio network temporary identifier C-RNTI or a subscriber number of the beneficial UE.

In a situation in which the base station determines the RB of the beneficial UE performing cooperative communication and the corresponding support UE according to the location information of the UE, the type of the UE, or the channel information of the UE:

The processor 901 is further configured to determine the RB of the beneficial UE performing cooperative communication and the corresponding support UE according to the location information of the UE, the type of the UE, or the channel information of the UE.

Optionally, the transceiver 902 is further configured to receive cooperative communication UE information sent by a core network device, where the cooperative communication UE information includes information of the beneficial UE that needs to perform cooperative communication; the processor 901 is further configured to determine, according to the cooperative communication UE information, the beneficial UE performing cooperative communication; the processor 901 is further configured to configure the RB configuration information of the beneficial UE for the beneficial UE determined by the processor 901; the transceiver 902 is further configured to send the RB configuration information of the beneficial UE that is configured by the processor 901 to the beneficial UE, so that the beneficial UE establishes the corresponding RB; and the processor 901 is further configured to determine, according to the location information of the UE, the type of the UE, or the channel information of the UE, the support UE corresponding to the RB of the beneficial UE.

Optionally, the transceiver 902 is further configured to receive an RRC message or a MAC CE that carries a cooperative communication request and sent by the beneficial UE; and the processor 901 is further configured to determine, according to the RRC message or the MAC CE that is sent by the beneficial UE and received by the transceiver 902, the RB of the beneficial UE performing cooperative communication, and determine the RB of the beneficial UE performing cooperative communication and the corresponding support UE according to the location information of the UE, the type of the UE, or the channel information of the UE. The processor 901 configures the cooperative RB configuration information of the beneficial UE for the beneficial UE according to the RRC message or the MAC CE that is sent by the beneficial UE and received by the transceiver 902; the transceiver 902 is configured to send the cooperative RB configuration information of the beneficial UE that is configured by the processor 901 to the beneficial UE, so that the beneficial UE establishes the corresponding cooperative RB; the processor 901 is further configured to configure the cooperative RB configuration information of the support UE for the support UE after the processor 901 determines the support UE corresponding to the RB of the beneficial UE; and the transceiver 902 is further configured to send the cooperative RB configuration information of the support UE that is configured by the processor 901 to the support UE, so that the support UE establishes the corresponding cooperative RB; or the processor 901 is further configured to: after the processor 901 determines the support UE corresponding to the RB of the beneficial UE performing cooperative communication, configure the cooperative RB configuration information of the beneficial UE and the cooperative RB configuration information of the support UE respectively for the beneficial UE and the support UE that are determined by the processor 901; and the transceiver 902 is further configured to send the cooperative RB configuration information of the beneficial UE that is configured by the processor 901 to the beneficial UE, and send the cooperative RB configuration information of the support UE that is configured by the processor 901 to the support UE, so that the beneficial UE and the support UE establish the corresponding cooperative RB, respectively.

Optionally, the transceiver 902 is further configured to receive a cooperative RB configuration rejection message sent by the support UE, where the cooperative RB configuration rejection message is fed back by the support UE to the base station due to absence of a supporting capability of the support UE , or a user policy or a poor state of a short-distance link.

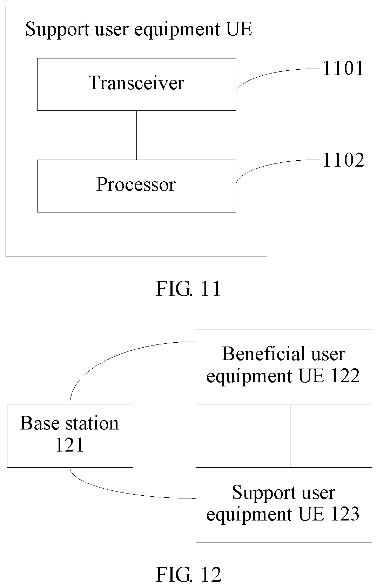

An embodiment of the present invention further provides paired UEs, which include: one beneficial UE and at least one support UE. As shown in FIG. 10, the beneficial UE includes a transceiver 1001 and a processor 1002, and as shown in FIG. 11, the support UE includes a transceiver 1101 and a processor 1102.

The transceiver 1001 of the beneficial UE is configured to receive cooperative RB configuration information of the beneficial UE that is sent by a base station; and the transceiver 1101 of the support UE is configured to receive cooperative RB configuration information of the support UE that is sent by the base station, where the cooperative RB configuration information is sent by the base station after the base station determines an RB of the beneficial UE and the support UE in the paired UEs performing cooperative communication.

The processor 1002 of the beneficial UE is configured to establish a corresponding cooperative RB according to the cooperative RB configuration information received by the transceiver of the beneficial UE; and the processor 1102 of the support UE is configured to establish a corresponding cooperative RB according to the cooperative RB configuration information received by the transceiver of the support UE.

The transceiver 1001 of the beneficial UE and the transceiver 1101 of the support UE perform cooperative communication with the base station.

The beneficial UE further includes a processor 1002, and the support UE further includes an obtaining unit 8023.

The processor 1002 of the beneficial UE is configured to obtain a pairing identifier of the beneficial UE; and the processor 1102 of the support UE is configured to obtain a pairing identifier of the support UE.

When the beneficial UE is close to the support UE, the beneficial UE may negotiate with the support UE to obtain the pairing identifier of the beneficial UE performing cooperative communication and the pairing identifier of the support UE, respectively. Alternatively, a user may perform negotiation and configure the pairing identifier of the beneficial UE performing cooperative communication and the pairing identifier of the support UE for the beneficial UE and the support UE. Here, the pairing identifier may include a random number, a subscriber number, a uniform group-RNTI, or the like of any one of the beneficial UE and the support UE.

The transceiver 1001 of the beneficial UE is further configured to send a radio resource control RRC message carrying the pairing identifier of the beneficial UE that is obtained by the processor 1002 of the beneficial UE and an NAS message packet for requesting establishment of a bearer to the base station, so that the base station returns RB configuration information of the beneficial UE to the beneficial UE according to the received RRC message sent by the beneficial UE; the transceiver 1001 of the beneficial UE is further configured to receive the RB configuration information of the beneficial UE that is returned by the base station; and the processor 1002 of the beneficial UE is further configured to establish a corresponding RB according to the RB configuration information of the beneficial UE that is received by the transceiver 1001 of the beneficial UE.

The transceiver 1101 of the support UE is further configured to send an RRC message or a medium access control layer control element MAC CE that carries the pairing identifier of the support UE to the base station, so that the base station reserves an RRC connection of the support UE, stores the pairing identifier of the support UE, and determines the support UE consistent with the pairing identifier of the beneficial UE as a support UE corresponding to the RB of the beneficial UE.

The transceiver 1001 of the beneficial UE is further configured to receive the RB configuration information of the beneficial UE that is sent by the base station; and the processor 1002 of the beneficial UE is further configured to establish the corresponding RB according to the RB configuration information of the beneficial UE that is received by the transceiver 1001 of the beneficial UE, so that the base station determines, according to location information of the UE, a type of the UE, or channel information of the UE, the support UE corresponding to the RB of the beneficial UE, where the RB configuration information of the beneficial UE is sent by the base station after determining, according to received cooperative communication UE information sent by a core network device, the beneficial UE performing cooperative communication, and the cooperative communication UE information includes information of the beneficial UE that needs to perform cooperative communication.

The processor 1002 of the beneficial UE is configured to obtain the pairing identifier of the beneficial UE; and the processor 1102 of the support UE is configured to obtain the pairing identifier of the support UE. The transceiver 1001 of the beneficial UE is further configured to send an RRC message or a MAC CE that carries the pairing identifier obtained by the obtaining unit of the beneficial UE to the base station; and the transceiver 1101 of the support UE is further configured to send an RRC message or a MAC CE that carries the pairing identifier obtained by the obtaining unit of the support UE to the base station, so that the base station uses a UE with a pairing identifier that is consistent with the pairing identifier of the beneficial UE as the support UE corresponding to the RB of the beneficial UE. Optionally, the RRC message or the MAC CE that is sent by the transceiver 1001 of the beneficial UE and the transceiver 1101 of the support UE respectively to the base station further carries index information of an RB performing cooperative communication, so that the base station determines, according to the index information of the RB, the RB of the beneficial UE performing cooperative communication, and further, the base station uses a UE with a pairing identifier that is consistent with the pairing identifier of the beneficial UE as the support UE corresponding to the RB of the beneficial UE performing cooperative communication.

The pairing identifier includes a random number, a subscriber number of any one of the beneficial UE and the support UE or a uniform group radio network temporary identifier group-RNTI.

The transceiver 1101 of the support UE is further configured to send an RRC message or a MAC CE that carries a user identifier of the beneficial UE to the base station, so that the base station reserves an RRC connection of the support UE according to the RRC message or the MAC CE, and determines, according to the user identifier of the beneficial UE, that the support UE is the support UE corresponding to the RB of the beneficial UE, where the user identifier of the beneficial UE includes a cell radio network temporary identifier C-RNTI or a subscriber number of the beneficial UE.

The transceiver 1001 of the beneficial UE is further configured to send an RRC message or a MAC CE that carries a cooperative communication request to the base station, so that the base station determines, according to the received RRC message or MAC CE that is sent by the beneficial UE, the RB of the beneficial UE performing cooperative communication, and determines the RB of the beneficial UE performing cooperative communication and the corresponding support UE according to the location information of the UE, the type of the UE, or the channel information of the UE.

The transceiver 1101 of the support UE in the paired UEs is further configured to feed back a cooperative RB configuration rejection message to the base station due to absence of a supporting capability of the support UE , or a user policy or a poor state of a short-distance link.

An embodiment of the present invention further provides a system for establishing an RB. As shown in FIG. 12, the system includes: a base station 121 and paired UEs, where the paired UEs include one beneficial UE 122 and at least one support UE 123.

The base station 121 determines an RB of the beneficial UE 122 performing cooperative communication and the corresponding support UE 123, configures corresponding cooperative RB configuration information for the beneficial UE 122 and the corresponding support UE 123, and then, sends the corresponding cooperative RB configuration information to the beneficial UE 122 and the corresponding support UE 123, respectively. The UE may be a support UE or a beneficial UE, and receive the corresponding cooperative RB configuration information sent by the base station 121, and establish a corresponding cooperative RB; in this way, the beneficial UE 122 and the support UE 123 form a cooperative communication group, and cooperative communication may be performed.

The base station 121 may determine the RB of the beneficial UE performing cooperative communication and the corresponding support UE according to location information of the UE, a type of the UE, or channel information of the UE, or determine the RB of the beneficial UE 122 performing cooperative communication and the corresponding support UE 123 according to a message that carries a pairing identifier and is sent by the UE, where the pairing identifier is obtained through negotiation by the beneficial UE 122 with the support UE 123.

The embodiments of the present invention provide a method, an apparatus, and a system for establishing a radio bearer. A base station determines an RB of a beneficial UE performing cooperative communication and a corresponding support UE, and sends configured corresponding cooperative RB configuration information to the beneficial UE and the corresponding support UE, so that the beneficial UE and the corresponding support UE establish a corresponding cooperative RB; therefore, a cooperative communication group is formed, and cooperative communication is performed.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a radio bearer, RB, between User Equipments, the method comprising the steps of:
determining (101), by a base station, an RB of a beneficial user equipment, UE, performing cooperative communication and a support UE corresponding to the RB of the beneficial UE;
sending (102), by the base station, cooperative RB configuration information of the beneficial UE to the beneficial UE for the beneficial UE to establish a cooperative RB, and sending cooperative RB configuration information of the support UE to the support UE for the support UE to establish the cooperative RB; and
performing (103), by the base station, cooperative communication with the beneficial UE and the support UE; wherein the determining, by a base station, an RB of a beneficial UE performing cooperative communication and a support UE corresponding to the RB of the beneficial UE comprises the further steps of: receiving, by the base station, a radio resource control, RRC, message which carries a first pairing identifier of the beneficial UE and a non-access stratum, NAS, message packet for requesting establishment of a bearer and is sent by the beneficial UE;
returning, by the base station, RB configuration information of the beneficial UE to the beneficial UE according to the received RRC message sent by the beneficial UE for establishing a corresponding RB;
after receiving an RRC message or a medium access control layer control element, MAC CE, that carries a second
pairing identifier of at least one UE and is sent by the at least one UE, reserving, by the base station, an RRC connection of the at least one UE, and storing the second pairing identifier of the at least one UE; and determining, by the base station, that the UE with the second pairing identifier being consistent with the first pairing identifier of the beneficial UE as the support UE corresponding to the RB of the beneficial UE.

2. The method according to claim 1, wherein the sending, by the base station, cooperative RB configuration information of the beneficial UE to the beneficial UE, and sending cooperative RB configuration information of the support UE to the support UE comprises:
after determining the support UE corresponding to the RB of the beneficial UE performing cooperative communication, sending, by the base station, the cooperative RB configuration information of the beneficial UE to the beneficial UE, and sending the cooperative RB configuration information of the support UE to the support UE, respectively; or
when the RB configuration information of the beneficial UE that is sent by the base station to the beneficial UE is the cooperative RB configuration information, and the beneficial UE establishes the corresponding cooperative RB, after determining the support UE corresponding to the RB of the beneficial UE performing cooperative communication, sending, by the base station, the cooperative RB configuration information of the support UE to the corresponding support UE.

3. The method according to claim 1, wherein the determining, by a base station, an RB of a beneficial UE performing cooperative communication and a support UE corresponding to the RB of the beneficial UE comprises:
determining, by the base station, the RB of the beneficial UE and the corresponding support UE according to location information of the UE, a type of the UE, or channel information of the UE.

4. Abase station, comprising:
a determining unit (601), configured to determine a radio bearer, RB, of a beneficial user equipment, UE, performing cooperative communication and a support UE corresponding to the RB of the beneficial UE;
a configuration unit (602), configured to configure cooperative RB configuration information of the beneficial UE and cooperative RB configuration information of the support UE respectively for the beneficial UE and the support UE that are determined by the determining unit (601); and
a transceiver unit (603), configured to send the cooperative RB configuration information of the beneficial UE that is configured by the configuration unit (602) to the beneficial UE for the beneficial UE to establish a cooperative RB, and send the cooperative RB configuration information of the support UE that is configured by the configuration unit (602) to the support UE for the support UE to establish the cooperative RB,
the transceiver unit (603) is further configured to transmit service data of the beneficial UE to the support UE to perform cooperative communication; wherein
the transceiver unit (603) is further configured to receive a radio resource control, RRC, message that carries a first pairing identifier of the beneficial UE and a non-access stratum, NAS, message packet for requesting establishment of a bearer and is sent by the beneficial UE;
the configuration unit (602) is further configured to send RB configuration information of the beneficial UE to the beneficial UE according to the RRC message sent by the beneficial UE and received by the transceiver unit (603);
the transceiver unit (603) is further configured to receive a RRC message or a medium access control layer control element, MAC CE, that carries a second pairing identifier of at least one UE and is sent by the at least one UE;
a processing unit is configured to reserve an RRC connection of the at least one UE, and store the second pairing identifier of the at least one UE according to a reserved RRC connection of the at least one UE that is sent by the at least one UE and received by the transceiver unit (603); and
the determining unit (601) is configured to determine the UE corresponding to the second pairing identifier being consistent with the first pairing identifier as the support UE corresponding to the RB of the beneficial UE.

5. The base station according to claim 4, wherein the transceiver unit (603) is further configured to send the RB configuration information of the beneficial UE that is configured by the configuration unit (602) to the beneficial UE for the support UE to establish the corresponding cooperative RB.

6. The base station according to claim 4 or 5, wherein
when the RB configuration information of the beneficial UE that is configured by the configuration unit (602) for the beneficial UE determined by the determining unit (601) is conventional RB configuration information of the beneficial UE, the configuration unit (602) is further configured to: after the determining unit (601) determines the support UE corresponding to the RB of the beneficial UE performing cooperative communication, configure the cooperative RB configuration information of the beneficial UE and the cooperative RB configuration information of the support UE respectively for the beneficial UE and the support UE that are determined by the determining unit (601); and the transceiver unit (603) is further configured to send the cooperative RB configuration information of the beneficial UE that is configured by the configuration unit (602) to the beneficial UE, and send the cooperative RB configuration information of the support UE that is configured by the configuration unit (602) to the support UE; or
when the RB configuration information of the beneficial UE that is configured by the configuration unit (602) for the beneficial UE determined by the determining unit (601) is the cooperative RB configuration information of the beneficial UE, the transceiver unit (603) is further configured to send the cooperative RB configuration information of the beneficial UE that is configured by the configuration unit (602) to the beneficial UE for the beneficial UE to establish the corresponding cooperative RB; the configuration unit (602) is further configured to configure the cooperative RB configuration information of the support UE for the support UE after the determining unit (601) determines the support UE corresponding to the RB of the beneficial UE performing cooperative communication; and the transceiver unit (603) is further configured to send the cooperative RB configuration information of the support UE that is configured by the configuration unit (602) to the corresponding support UE for the support UE to establish the corresponding cooperative RB.

7. The base station according to claim 4, wherein
the determining unit (601) is further configured to determine the RB of the beneficial UE performing cooperative communication and the corresponding support UE according to location information of a UE, a type of a UE, or channel information of a UE.

8. A communication system, comprising: one beneficial UE and at least one support UE, wherein the beneficial UE comprises: a transceiver unit (701) and a bearer establishment unit (702), and the support UE comprises a transceiver unit (801) and a bearer establishment unit (802), wherein
the transceiver unit of the beneficial UE is configured to receive cooperative RB configuration information of the beneficial UE that is sent by a base station; and the transceiver unit of the support UE is configured to receive cooperative RB configuration information of the support UE that is sent by the base station, wherein the cooperative RB configuration information is sent by the base station after the base station determines an RB of the beneficial UE and the support UE in the paired UEs performing cooperative communication;
the bearer establishment unit of the beneficial UE is configured to establish a corresponding cooperative RB according to the cooperative RB configuration information received by the transceiver unit of the beneficial UE; and the bearer establishment unit (802) of the support UE is configured to establish a corresponding cooperative RB according to the cooperative RB configuration information received by the transceiver unit of the support UE; and
the transceiver unit of the beneficial UE and the transceiver unit of the support UE perform cooperative communication with the base station; an obtaining unit of the beneficial UE is configured to obtain a first pairing identifier of the beneficial UE; and an obtaining unit of the support UE is configured to obtain a second pairing identifier of the support UE;
the transceiver unit of the beneficial UE is further configured to send a radio resource control RRC message carrying the first pairing identifier of the beneficial UE that is obtained by the obtaining unit of the beneficial UE and an NAS message packet for requesting establishment of a bearer to the base station, so that the base station returns RB configuration information of the beneficial UE to the beneficial UE according to the received RRC message sent by the beneficial UE;
the transceiver unit of the beneficial UE is further configured to receive the RB configuration information of the beneficial UE that is returned by the base station;
the bearer establishment unit of the beneficial UE is further configured to establish a corresponding RB according to the RB configuration information of the beneficial UE that is received by the transceiver unit of the beneficial UE; and
the transceiver unit of the support UE is further configured to send an RRC message or a medium access control layer control element MAC CE that carries the second pairing identifier of the support UE to the base station, whereby the base station is adapted to reserve an RRC connection of the support UE, to store the second pairing identifier of the support UE, and to determine the support UE according to the second pairing identifier being consistent with the first pairing identifier of the beneficial UE as the support UE corresponding to the RB of the beneficial UE.

## Patentansprüche

1. Verfahren zur Herstellung eines Funkträgers ("Radio Bearer", RB), zwischen Endgeräten, wobei das Verfahren die folgenden Schritte umfasst:
Bestimmen (101), durch eine Basisstation, eines RB eines nutznießenden Endgeräts ("User Equipment", UE), das kooperative Kommunikation durchführt, und eines Unterstützungs-UE, das dem RB des nutznießenden UE entspricht;
Senden (102), durch die Basisstation, von Konfigurationsinformationen für kooperative RB des nutznießenden UE an das nutznießende UE, so dass das nutznießende UE einen kooperativen RB aufbaut, und Senden von Konfigurationsinformationen für kooperative RB des Unterstützungs-UE an das Unterstützungs-UE, so dass das Unterstützungs-UE den kooperativen RB aufbaut; und
Durchführen (103), durch die Basisstation, von kooperativer Kommunikation mit dem nutznießenden UE und dem Unterstützungs-UE;
wobei das Bestimmen, durch die Basisstation, eines RB eines nutznießenden UE, das kooperative Kommunikation durchführt, und eines Unterstützungs-UE, das dem RB des nutznießenden UE entspricht, die folgenden weiteren Schritte umfasst;
Empfangen, durch die Basisstation, einer Funkressourcenkontrolle("Radio Resource Control", RRC)-Nachricht, die eine erste Paarungskennung des nutznießenden UE und ein Nichtzugangsschicht("Non-Access Stratum", NAS)-Nachrichtenpaket trägt,
um den Aufbau eines Trägers anzufordern, und von dem nutznießenden UE gesendet wird;
Zurücksenden, durch die Basisstation, von RB-Konfigurationsinformationen des nutznießenden UE an das nutznießende UE gemäß der empfangenen RRC-Nachricht,
die von dem nutznießenden UE gesendet wurde, um einen entsprechenden RB aufzubauen;
nach dem Empfangen einer RRC-Nachricht oder eines Steuerelements der Medienzugriffskontrollschicht ("Medium Access Control Layer Control Element",
MAC CE), die/das eine zweite Paarungskennung wenigstens eines UE trägt und von dem wenigstens einen UE gesendet wird, Reservieren, durch die Basisstation, einer RRC-Verbindung des wenigstens einen UE und Speichern der zweiten Paarungskennung des wenigstens einen UE; und
Bestimmen, durch die Basisstation, dass das UE mit der zweiten Paarungskennung, die mit der ersten Paarungskennung des nutznießenden UE übereinstimmt, als das Unterstützungs-UE entsprechend dem RB des nutznießenden UE.

2. Verfahren gemäß Anspruch 1, wobei das Senden, durch die Basisstation, von Konfigurationsinformationen für kooperative RB des nutznießenden UE an das nutznießende UE und das Senden von Konfigurationsinformationen für kooperative RB des Unterstützungs-UE an das Unterstützungs-UE umfasst:
nach dem Bestimmen, dass das Unterstützungs-UE, das dem RB des nutznießenden UE entspricht, Durchführen von kooperativer Kommunikation, Senden, durch die Basisstation, der Konfigurationsinformationen für kooperative RB des nutznießenden UE an das nutznießende UE bzw. Senden der Konfigurationsinformationen für kooperative RB des Unterstützungs-UE an das Unterstützungs-UE; oder
wenn die RB-Konfigurationsinformationen des nutznießenden UE, die von der Basisstation an das nutznießende UE gesendet werden, die Konfigurationsinformationen für kooperative RB sind und das nutznießende UE den entsprechenden kooperativen RB aufbaut, nach dem Bestimmen, dass das Unterstützungs-UE, welches dem RB des nutznießenden UE entspricht, kooperative Kommunikation durchführt, Senden, durch die Basisstation, der Konfigurationsinformationen für kooperative RB des Unterstützungs-UE an das entsprechende Unterstützungs-UE.

3. Verfahren gemäß Anspruch 1, wobei das Bestimmen, durch die Basisstation, eines RB eines nutznießenden UE, das kooperative Kommunikation durchführt, und eines Unterstützungs-UE, das dem RB des nutznießenden UE entspricht, umfasst;
Bestimmen, durch die Basisstation, des RB des nutznießenden UE und des entsprechenden Unterstützungs-UE gemäß den Standortinformationen des UE, einem Typ des UE oder Kanalinformationen des UE.

4. Basisstation, umfassend:
eine Bestimmungseinheit (601), die dafür ausgelegt ist, einen Funkträger, RB, eines nutznießenden Endgeräts, UE, das kooperative Kommunikation durchführt, und eines Unterstützungs-UE, das dem RB des nutznießenden UE entspricht, zu bestimmen;
eine Konfigurationseinheit (602), die dafür ausgelegt ist, Konfigurationsinformationen für kooperative RB des nutznießenden UE bzw. Konfigurationsinformationen für kooperative RB des Unterstützungs-UE für das nutznießende UE und das Unterstützungs-UE, die von der Bestimmungseinheit (601) bestimmt wurden, zu konfigurieren; und
eine Sendeempfängereinheit (603), die dafür ausgelegt ist, Konfigurationsinformationen für kooperative RB des nutznießenden UE, die von der Konfigurationseinheit (602) konfiguriert wurden, an das nutznießende UE zu senden, so dass das nutznießende UE einen kooperativen RB aufbaut, und die Konfigurationsinformationen für kooperative RB des Unterstützungs-UE, die von der Konfigurationseinheit (602) konfiguriert wurden, an das Unterstützungs-UE zu senden, so dass das Unterstützungs-UE den kooperativen RB aufbaut,
wobei die Sendeempfängereinheit (603) ferner dafür ausgelegt ist, Dienstdaten des nutznießenden UE an das Unterstützungs-UE zu senden, um kooperative Kommunikation durchzuführen; wobei
die Sendeempfängereinheit (603) ferner dafür ausgelegt ist, eine Funkressourcenkontrolle("Radio Resource Control", RRC)-Nachricht zu empfangen, die eine erste Paarungskennung des nutznießenden UE und ein Nichtzugangs-schicht("Non-Access Stratum", NAS)-Nachrichtenpaket trägt, um den Aufbau eines Trägers anzufordern, und von dem nutznießenden UE gesendet wird;
wobei die Konfigurationseinheit (602) ferner dafür ausgelegt ist, RB-Konfigurationsinformationen des nutznießenden UE an das nutznießende UE zu senden, gemäß der RRC-Nachricht, die von dem nutznießenden UE gesendet und von der Sendeempfängereinheit (603) empfangen wurde;
wobei die Sendeempfängereinheit (603) ferner dafür ausgelegt ist, eine RRC-Nachricht oder ein Steuerelement der Medienzugriffskontrollschicht ("Medium Access Control Layer Control Element", MAC CE), die/das eine zweite Paarungskennung wenigstens eines UE trägt und von dem wenigstens einen UE gesendet wird, zu empfangen;
wobei eine Verarbeitungseinheit dafür ausgelegt ist, eine RRC-Verbindung des wenigstens einen UE zu reservieren und die zweite Paarungskennung des wenigstens einen UE zu speichern, gemäß einer reservierten RRC-Verbindung des wenigstens einen UE, die von dem wenigstens einen UE gesendet und von der Sendeempfängereinheit (603) empfangen wird; und
wobei die Bestimmungseinheit (601) dafür ausgelegt ist, das UE, das der zweiten Paarungskennung, die mit der ersten Paarungskennung übereinstimmt, entspricht, als das Unterstützungs-UE zu bestimmen, entsprechend dem RB des nutznießenden UE.

5. Basisstation gemäß Anspruch 4, wobei die Sendeempfängereinheit (603) ferner dafür ausgelegt ist, die RB-Konfigurationsinformationen des nutznießenden UE, die von der Konfigurationseinheit (602) konfiguriert wurden, an das nutznießende UE zu senden, so dass das Unterstützungs-UE den entsprechenden kooperativen RB aufbaut.

6. Basisstation gemäß Anspruch 4 oder 5, wobei,
wenn die RB-Konfigurationsinformationen des nutznießenden UE, die von der Konfigurationseinheit (602) für das von der Bestimmungseinheit (601) bestimmte nutznießende UE konfiguriert wurden, herkömmliche RB-Konfigurationsinformationen des nutznießenden UE sind, die Konfigurationseinheit (602) ferner dafür ausgelegt ist: nachdem die Bestimmungseinheit (601) das Unterstützungs-UE bestimmt hat, das dem RB des nutznießenden UE, welches kooperative Kommunikation durchführt, entspricht, die Konfigurationsinformationen für kooperative RB des nutznießenden UE bzw. die Konfigurationsinformationen für kooperative RB des Unterstützungs-UE für das nutznießende UE und das Unterstützungs-UE, die von der Bestimmungseinheit (601) bestimmt wurden, zu konfigurieren; und wobei die Sendeempfängereinheit (603) ferner dafür ausgelegt ist, die Konfigurationsinformationen für kooperative RB des nutznießenden UE, die von der Konfigurationseinheit (602) konfiguriert wurden, an das nutznießende UE zu senden und die Konfigurationsinformationen für kooperative RB des Unterstützungs-UE, die von der Konfigurationseinheit (602) konfiguriert wurden, an das Unterstützungs-UE zu senden; oder
wenn die RB-Konfigurationsinformationen des nutznießenden UE, die von der Konfigurationseinheit (602) für das von der Bestimmungseinheit (601) bestimmte nutznießende UE konfiguriert wurden, die Konfigurationsinformationen für kooperative RB des nutznießenden UE sind, die Sendeempfängereinheit (603) ferner dafür ausgelegt ist, die Konfigurationsinformationen für kooperative RB des nutznießenden UE, die von der Konfigurationseinheit (602) konfiguriert wurden, an das nutznießende UE zu senden, so dass das nutznießende UE den entsprechenden kooperativen RB aufbaut; wobei die Konfigurationseinheit (602) ferner dafür ausgelegt ist, die Konfigurationsinformationen für kooperative RB des Unterstützungs-UE für das Unterstützungs-UE zu konfigurieren, nachdem die Bestimmungseinheit (601) das Unterstützungs-UE bestimmt hat, das dem RB des nutznießenden UE, welches kooperative Kommunikation durchführt, entspricht; und wobei die Sendeempfängereinheit (603) ferner dafür ausgelegt ist, die Konfigurationsinformationen für kooperative RB des Unterstützungs-UE, die von der Konfigurationseinheit (602) konfiguriert wurden, an das entsprechende Unterstützungs-UE zu senden, so dass das Unterstützungs-UE den entsprechenden kooperativen RB aufbaut.

7. Basisstation gemäß Anspruch 4, wobei
die Bestimmungseinheit (601) ferner dafür ausgelegt ist, den RB des nutznießenden UE, das kooperative Kommunikation durchführt, und des entsprechenden Unterstützungs-UE gemäß Standortinformationen eines UE, eines Typs eines UE oder Kanalinformationen eines UE zu bestimmen.

8. Kommunikationssystem, umfassend: ein nutznießendes UE und wenigstens ein Unterstützungs-UE, wobei das nutznießende UE umfasst: eine Sendeempfängereinheit (701) und eine Trägeraufbaueinheit (702), und wobei das Unterstützungs-UE eine Sendeempfängereinheit (801) und eine Trägeraufbaueinheit (802) umfasst, wobei
die Sendeempfängereinheit des nutznießenden UE dafür ausgelegt ist, Konfigurationsinformationen für kooperative RB des nutznießenden UE zu empfangen, die von einer Basisstation gesendet werden; und wobei die Sendeempfängereinheit des Unterstützungs-UE dafür ausgelegt ist, Konfigurationsinformationen für kooperative RB des Unterstützungs-UE zu empfangen, die von der Basisstation gesendet werden, wobei die Konfigurationsinformationen für kooperative RB von der Basisstation gesendet werden, nachdem die Basisstation einen RB des nutznießenden UE und des Unterstützungs-UE in den gepaarten UEs, die kooperative Kommunikation durchführen, bestimmt hat;
wobei die Trägeraufbaueinheit des nutznießenden UE dafür ausgelegt ist, einen entsprechenden kooperativen RB aufzubauen, gemäß den Konfigurationsinformationen für kooperative RB, die von der Sendeempfängereinheit des nutznießenden UE empfangen wurden; und wobei die Trägeraufbaueinheit (802) des Unterstützungs-UE dafür ausgelegt ist, einen entsprechenden kooperativen RB aufzubauen, gemäß den Konfigurationsinformationen für kooperative RB, die von der Sendeempfängereinheit des Unterstützungs-UE empfangen wurden; und
wobei die Sendeempfängereinheit des nutznießenden UE und die Sendeempfängereinheit des Unterstützungs-UE kooperative Kommunikation mit der Basisstation durchführen;
wobei eine Beschaffungseinheit des nutznießenden UE dafür ausgelegt ist, eine erste Paarungskennung des nutznießenden UE zu beschaffen; und eine Beschaffungseinheit des Unterstützungs-UE dafür ausgelegt ist, eine zweite Paarungskennung des Unterstützungs-UE zu beschaffen;
wobei die Sendeempfängereinheit des nutznießenden UE ferner dafür ausgelegt ist, eine Funkressourcenkontrolle("Radio Resource Control", RRC)-Nachricht, die die erste Paarungskennung des nutznießenden UE trägt, die von der Beschaffungseinheit des nutznießenden UE beschafft wurde, und ein NAS-Nachrichtenpaket zum Anfordern des Aufbaus eines Trägers an die Basisstation zu senden, so dass die Basisstation RB-Konfigurationsinformationen des nutznießenden UE an das nutznießende UE zurücksendet, gemäß der empfangenen RRC-Nachricht, die von dem nutznießenden UE gesendet wurde;
wobei die Sendeempfängereinheit des nutznießenden UE ferner dafür ausgelegt ist, die RB-Konfigurationsinformationen des nutznießenden UE, die von der Basisstation zurückgesendet werden, zu empfangen;
wobei die Trägeraufbaueinheit des nutznießenden UE ferner dafür ausgelegt ist, einen entsprechenden RB aufzubauen, gemäß den RB-Konfigurationsinformationen des nutznießenden UE, die von der Sendeempfängereinheit des nutznießenden UE empfangen wurden; und
wobei die Sendeempfängereinheit des Unterstützungs-UE ferner dafür ausgelegt ist, eine RRC-Nachricht oder ein Steuerelement der Medienzugriffskontrollschicht ("Medium Access Control Layer Control Element", MAC CE), die/das die zweite Paarungskennung des Unterstützungs-UE trägt, an die Basisstation zu senden, wodurch die Basisstation dafür ausgelegt ist, eine RRC-Verbindung des Unterstützungs-UE zu reservieren, die zweite Paarungskennung des Unterstützungs-UE zu speichern und das Unterstützungs-UE gemäß der zweiten Paarungskennung, die mit der ersten Paarungskennung des nutznießenden UE übereinstimmt, als das Unterstützungs-UE, das dem RB des nutznießenden UE entspricht, zu bestimmen.

## Revendications

1. Procédé d'établissement de lien radio, RB, entre des équipements utilisateurs, le procédé comprenant les étapes consistant à :
déterminer (101), par une station de base, un RB d'un équipement utilisateur, UE, bénéficiaire, effectuer une communication coopérative et un UE de support correspondant au RB de l'UE bénéficiaire ;
envoyer (102), par la station de base, des informations de configuration RB coopératives de l'UE bénéficiaire à l'UE bénéficiaire pour que l'UE bénéficiaire établisse un RB coopératif, et envoyer des informations de configuration RB coopératives de l'UE de support à l'UE de support pour que l'UE de support établisse un RB coopératif ; et
effectuer (103), par la station de base, une communication coopérative avec l'UE bénéficiaire et l'UE de support ;
dans lequel la détermination, par une station de base, d'un RB d'un UE bénéficiaire qui effectue une communication coopérative et d'un UE de support correspondant au RB de l'UE bénéficiaire comprend les étapes supplémentaires consistant à :
recevoir, par la station de base, un message de contrôle de ressources radio, RRC, qui achemine un premier identifiant d'appariement de l'UE bénéficiaire et un paquet de messages de strate de non-accès, NAS, pour demander l'établissement d'un lien, et qui est envoyé par l'UE bénéficiaire ;
renvoyer, par la station de base, des informations de configuration RB de l'UE bénéficiaire à l'UE bénéficiaire en fonction du message RRC reçu envoyé par l'UE bénéficiaire afin d'établir un RB correspondant ;
après réception d'un message RRC ou d'un élément de commande de couche de commande d'accès au support, CE MAC, qui achemine un second identifiant d'appariement d'au moins un UE et qui est envoyé par l'au moins un UE, réserver, par la station de base, une connexion RRC de l'au moins un UE, et stocker le second identifiant d'appariement de l'au moins un UE ; et
déterminer, par la station de base, que l'UE avec le second identifiant d'appariement est compatible avec le premier identifiant d'appariement de l'UE bénéficiaire en tant qu'UE de support correspondant au RB de l'UE bénéficiaire.

2. Procédé selon la revendication 1, dans lequel l'envoi, par la station de base, d'informations de configuration RB coopératives de l'UE bénéficiaire à l'UE bénéficiaire, et l'envoi d'informations de configuration RB coopératives de l'UE de support à l'UE de support, comprennent les étapes consistant à :
après détermination de l'UE de support correspondant au RB de l'UE bénéficiaire qui effectue une communication coopérative, envoyer, par la station de base, les informations de configuration RB coopératives de l'UE bénéficiaire à l'UE bénéficiaire, et envoyer les informations de configuration RB coopératives de l'UE de support à l'UE de support, respectivement ; ou
lorsque les informations de configuration RB de l'UE bénéficiaire qui sont envoyées par la station de base à l'UE bénéficiaire sont des informations de configuration RB coopératives, et que l'UE bénéficiaire établit le RB coopératif correspondant, après détermination de l'UE de support correspondant au RB de l'UE bénéficiaire qui effectue une communication coopérative, envoyer, par la station de base, les informations de configuration RB coopératives de l'UE de support à l'UE de support correspondant.

3. Procédé selon la revendication 1, dans lequel la détermination, par une station de base, d'un RB d'un UE bénéficiaire qui effectue une communication coopérative et d'un UE de support correspondant au RB de l'UE bénéficiaire comprend l'étape consistant à : déterminer, par la station de base, le RB de l'UE bénéficiaire et de l'UE de support correspondant en fonction des informations de localisation de l'UE, d'un type de l'UE, ou des informations de canal de l'UE.

4. Station de base, comprenant :
une unité de détermination (601), configurée pour déterminer un lien radio, RB, d'un équipement utilisateur, UE, bénéficiaire qui effectue une communication coopérative et d'un UE de support correspondant au RB de l'UE bénéficiaire ;
une unité de configuration (602), configurée pour configurer des informations de configuration RB coopératives de l'UE bénéficiaire et des informations de configuration RB coopératives de l'UE de support respectivement pour l'UE bénéficiaire et l'UE de support qui sont déterminées par l'unité de détermination (601) ; et
une unité d'émetteur-récepteur (603), configurée pour envoyer les informations de configuration RB coopératives de l'UE bénéficiaire qui sont configurées par l'unité de configuration (602) à l'UE bénéficiaire pour que l'UE bénéficiaire établisse un RB coopératif, et pour envoyer les informations de configuration RB coopératives de l'UE de support qui est configuré par l'unité de configuration (602) à l'UE de support pour que l'UE de support établisse le RB coopératif,
l'unité d'émetteur-récepteur (603) est configurée en outre pour transmettre des données de service de l'UE bénéficiaire à l'UE de support afin d'effectuer une communication coopérative ;
dans lequel
l'unité d'émetteur-récepteur (603) est configurée en outre pour recevoir un message de contrôle de ressources radio, RRC, qui achemine un premier identifiant d'appariement de l'UE bénéficiaire et un paquet de messages de strate de non-accès, NAS, pour demander l'établissement d'un lien et qui est envoyé à l'UE bénéficiaire ;
l'unité de configuration (602) est configurée en outre pour envoyer des informations de configuration RB de l'UE bénéficiaire à l'UE bénéficiaire en fonction du message RRC envoyé par l'UE bénéficiaire et reçu par l'unité d'émetteur-récepteur (603) ;
l'unité d'émetteur-récepteur (603) est configurée en outre pour recevoir un message RRC ou un élément de commande de couche de commande d'accès au support, CE MAC, qui achemine un second identifiant d'appariement d'au moins un UE et qui est envoyé par l'au moins un UE ;
une unité de traitement est configurée pour réserver une connexion RRC de l'au moins un UE, et pour stocker le second identifiant d'appariement de l'au moins un UE en fonction d'une connexion RRC réservée de l'au moins un UE qui est envoyé par l'au moins un UE et reçu par l'unité d'émetteur-récepteur (603) ; et
l'unité de détermination (601) est configurée pour déterminer que l'UE correspondant au second identifiant d'appariement est compatible avec le premier identifiant d'appariement en tant qu'UE de support correspondant au RB de l'UE bénéficiaire.

5. Station de base selon la revendication 4, dans lequel l'unité d'émetteur-récepteur (603) est configurée en outre pour envoyer les informations de configuration RB de l'UE bénéficiaire qui est configuré par l'unité de configuration (602) à l'UE bénéficiaire pour que l'UE de support établisse le RB coopératif correspondant.

6. Station de base selon la revendication 4 ou 5, dans laquelle
lorsque les informations de configuration RB de l'UE bénéficiaire qui sont configurées par l'unité de configuration (602) pour l'UE bénéficiaire déterminé par l'unité de détermination (601) sont des informations de configuration RB conventionnelles de l'UE bénéficiaire, l'unité de configuration (602) est configurée en outre pour : après que l'unité de détermination (601) détermine l'UE de support correspondant au RB de l'UE bénéficiaire qui effectue une communication coopérative, configurer les informations de configuration RB coopératives de l'UE bénéficiaire et les informations de configuration RB coopératives de l'UE de support respectivement pour l'UE bénéficiaire et l'UE de support qui sont déterminés par l'unité de détermination (601) ; et l'unité d'émetteur-récepteur (603) est configurée en outre pour envoyer les informations de configuration RB coopératives de l'UE bénéficiaire qui sont configurées par l'unité de configuration (602) à l'UE bénéficiaire, et envoyer les informations de configuration RB coopératives de l'UE de support qui sont configurées par l'unité de configuration (602) à l'UE de support ; ou
lorsque les informations de configuration RB de l'UE bénéficiaire qui sont configurées par l'unité de configuration (602) pour l'UE bénéficiaire déterminé par l'unité de détermination (601) sont les informations de configuration RB coopératives de l'UE bénéficiaire, l'unité d'émetteur-récepteur (603) est configurée en outre pour envoyer les informations de configuration RB coopératives de l'UE bénéficiaire qui sont configurées par l'unité de configuration (602) à l'UE bénéficiaire pour que l'UE bénéficiaire établisse le RB coopératif correspondant ; l'unité de configuration (602) est configurée en outre pour configurer les informations de configuration RB coopératives de l'UE de support pour l'UE de support après que l'unité de détermination (601) détermine l'UE de support correspondant au RB de l'UE bénéficiaire qui effectue une communication coopérative ; et l'unité d'émetteur-récepteur (603) est configurée en outre pour envoyer les informations de configuration RB coopératives de l'UE de support qui est configuré par l'unité de configuration (602) à l'UE de support correspondant pour que l'UE de support établisse le RB coopératif correspondant.

7. Station de base selon la revendication 4, dans laquelle
l'unité de détermination (601) est configurée en outre pour déterminer le RB de l'UE bénéficiaire qui effectue une communication coopérative et l'UE de support correspondant en fonction des informations de localisation d'un UE, d'un type d'UE,
ou d'informations de canal d'un UE.

8. Système de communication, comprenant : un UE bénéficiaire et au moins un UE de support, dans lequel l'UE bénéficiaire comprend : une unité d'émetteur-récepteur (701) et une unité d'établissement de lien (702), et l'UE de support comprend une unité d'émetteur-récepteur (801) et une unité d'établissement de lien (802), dans lequel l'unité d'émetteur-récepteur de l'UE bénéficiaire est configurée pour recevoir des informations de configuration RB coopératives de l'UE bénéficiaire qui sont envoyées par une station de base ; et l'unité d'émetteur-récepteur de l'UE de support est configurée pour recevoir des informations de configuration RB coopératives de l'UE de support qui sont envoyées par la station de base, dans lequel les informations de configuration RB coopératives sont envoyées par la station de base après que la station de base détermine un RB de l'UE bénéficiaire et de l'UE de support dans les UE appariés qui effectuent une communication coopérative ;
l'unité d'établissement de lien de l'UE bénéficiaire est configurée pour établir un RB coopératif correspondant en fonction des informations de configuration RB coopératives reçues par l'unité d'émetteur-récepteur de l'UE bénéficiaire ; et l'unité d'établissement de lien (802) de l'UE de support est configurée pour établir un RB coopératif correspondant en fonction des informations de configuration RB coopératives reçues par l'unité d'émetteur-récepteur de l'UE de support ; et
l'unité d'émetteur-récepteur de l'UE bénéficiaire et l'unité d'émetteur-récepteur de l'UE de support effectuent une communication coopérative avec la station de base ;
une unité d'obtention de l'UE bénéficiaire est configurée pour obtenir un premier identifiant d'appariement de l'UE bénéficiaire ; et une unité d'obtention de l'UE de support est configurée pour obtenir un second identifiant d'appariement de l'UE de support ;
l'unité d'émetteur-récepteur de l'UE bénéficiaire est configurée en outre pour envoyer un message RRC de contrôle de ressources radio acheminant le premier identifiant d'appariement de l'UE bénéficiaire qui est obtenu par l'unité d'obtention de l'UE bénéficiaire et un paquet de messages NAS pour demander l'établissement d'un lien à la station de base, de sorte que la station de base renvoie des informations de configuration RB de l'UE bénéficiaire à l'UE bénéficiaire en fonction du message RRC reçu envoyé par l'UE bénéficiaire ;
l'unité d'émetteur-récepteur de l'UE bénéficiaire est configurée en outre pour recevoir les informations de configuration RB de l'UE bénéficiaire qui sont renvoyées par la station de base ;
l'unité d'établissement de lien de l'UE bénéficiaire est configurée en outre pour établir un RB correspondant aux informations de configuration RB de l'UE bénéficiaire qui est reçu par l'unité d'émetteur-récepteur de l'UE bénéficiaire ; et
l'unité d'émetteur-récepteur de l'UE de support est configurée en outre pour envoyer un message RRC ou un élément de commande de couche de commande d'accès au support CE MAC qui achemine le second identifiant d'appariement de l'UE de support à la station de base, moyennant quoi la station de base est adaptée pour réserver une connexion RRC de l'UE de support, pour stocker le second identifiant d'appariement de l'UE de support, et pour déterminer l'UE de support en fonction du second identifiant d'appariement qui est conforme au premier identifiant d'appariement de l'UE bénéficiaire en tant qu'UE de support correspondant au RB de l'UE bénéficiaire.
